# FASCICULE DE BREVET EUROPEEN

(11) **EP 2 322 779 B1**
(45) Date de publication et mention de la délivrance du brevet: **02.03.2016**
(21) Numéro de dépôt: 10306232.9
(22) Date de dépôt: 09.11.2010
(51) Int. Cl.: F02B 31/06, F02D 9/10, F02M 35/10

(54) **Procédé de fabrication d'un collecteur d'admission et collecteur correspondant**
Herstellungsverfahren eines Ansaugkrümmers, und entsprechender Ansaugkrümmer
Method for manufacturing an intake manifold and corresponding manifold

(30) Priorité: 12.11.2009 FR 0957974
(43) Date de publication de la demande: 18.05.2011
(73) Titulaire: SYSTEMES MOTEURS, 78280 Guyancourt (FR)
(72) Inventeur: Menin, Denis, 68910, LABAROCHE (FR); Lambert, Arnaud, 88520, RAVES (FR)
(74) Mandataire: Nuss, Laurent

(56) Documents cités:
- EP-A1- 0 916 471
- DE-A1-102004 013 309
- FR-A1- 2 804 740
- FR-A1- 2 816 006
- FR-A1- 2 905 159
- US-A1- 2007 017 468
- US-B1- 6 763 802

## Description

La présente invention concerne le domaine des collecteurs ou répartiteurs d'admission pour moteurs à combustion interne, et a pour objet un procédé de fabrication d'un tel collecteur ou répartiteur, ainsi qu'un collecteur ou répartiteur, notamment obtenu par ce procédé.

De nombreuses constructions différentes de collecteurs ou répartiteurs sont déjà connues, ainsi que divers procédés de fabrication correspondants.

Parmi ces collecteurs ou répartiteurs existants, il y a notamment ceux qui comportent des organes de régulation des flux gazeux circulant dans les tubulures, plus particulièrement sous la forme de clapets montés pivotants dans les portions d'extrémité desdites tubulures.

L'intégration de ces organes de régulation rend la fabrication de tels collecteurs ou répartiteurs nettement plus complexe et délicate.

En effet, ces organes doivent être montés, éventuellement simultanément, avec leur axe de commande déporté ou traversant (formant alors également axe support) de manière à être tous mobiles aisément entre leurs positions d'ouverture maximale et de fermeture, ce tout en réalisant une étanchéité relative dans chaque tubulure et entre les tubulures, ainsi qu'une étanchéité absolue entre les tubulures et le milieu extérieur, tant au niveau du collecteur lui-même qu'au niveau de l'interface d'assemblage avec le bloc culasse.

Il en résulte des constructions compliquées nécessitant l'assemblage précis de plusieurs parties en plusieurs opérations consécutives, éventuellement avec mise en oeuvre de pièces d'assemblage additionnelles, sans toutefois pouvoir garantir de manière fiable que l'ensemble des conditions soit rempli. Une telle construction de l'état de la technique est connue par example de FR-A-2816006.

De plus, des opérations ultérieures peuvent être nécessaires pour retravailler ou conformer l'interface d'assemblage en vue d'aboutir à un état de surface permettant d'assurer une étanchéité suffisante après montage sur le bloc culasse.

La présente invention a pour objet de proposer une solution pour surmonter au moins certains, préférentiellement tous les inconvénients précités, et rendre le procédé de fabrication moins complexe et plus efficient.

A cet effet, l'invention a pour objet un procédé de fabrication d'un collecteur ou répartiteur d'admission comportant plusieurs tubulures pourvues de clapets de régulation et dont les parties d'extrémité définissant les ouvertures de sortie sont préférentiellement mutuellement alignées et regroupées en au moins une structure unitaire au niveau d'au moins une platine de fixation et de connexion, adaptée pour le montage dudit collecteur ou répartiteur sur le bloc culasse d'un moteur à combustion interne, ladite ou chaque platine définissant une face de contact, préférentiellement un plan de contact, pour un assemblage étanche avec ledit bloc culasse ou une partie de ce dernier, procédé caractérisé en ce qu'il consiste principalement à :
- fournir, d'une part, un ensemble fonctionnel [axe/clapets], d'autre part, des pièces à insérer formant paliers et, enfin, un corps de collecteur ou de répartiteur présentant, au niveau de la platine de fixation et de connexion et des portions d'extrémité des tubulures, des réservations et/ou logements pour la réception de l'ensemble fonctionnel et des pièces à insérer précitées ;
- monter les pièces formant paliers sur l'ensemble [axe/clapets], plus particulièrement sur des segments d'axe s'étendant entre les clapets ;
- mettre en place l'ensemble fonctionnel complété [axe/clapets/ pièces formant paliers] dans les portions d'extrémité et les réservations et/ou logements de réception ;
- réaliser un moulage ou surmoulage au niveau de la face de la platine destinée à venir en contact avec le bloc culasse et comportant la face ou le plan de contact, le matériau rapporté par moulage ou surmoulage assurant, d'une part, le blocage mécanique des composantes de l'ensemble fonctionnel complété dans leurs réservations et/ou logements les recevant respectivement et constituant, d'autre part, des formations participant à ou réalisant l'étanchéité aux gaz entre les portions d'extrémité des tubulures et le bloc culasse, plus particulièrement au niveau de la face ou du plan de contact, ainsi qu'éventuellement entre les tubulures.

L'invention concerne également un collecteur ou répartiteur d'admission comportant plusieurs tubulures dont les portions d'extrémité définissant les ouvertures de sortie sont mutuellement alignées et regroupées en au moins une structure unitaire au niveau d'au moins une platine de fixation et de connexion pour le montage étanche dudit collecteur ou répartiteur sur le bloc culasse d'un moteur à combustion interne, ladite ou chaque platine définissant une face de contact, préférentiellement un plan de contact avec ledit bloc culasse, ledit collecteur ou répartiteur comportant un ensemble [axe/clapets] monté dans lesdites portions d'extrémité des tubulures et dans ladite platine, dans des réservations et/ou des logements correspondants,
collecteur ou répartiteur caractérisé en ce qu'il comprend, d'une part, des pièces formant paliers de guidage en rotation de l'ensemble [axe/clapets] sous la forme d'inserts montés dans des logements de réception correspondants et, d'autre part, des formations de matériau surmoulé au niveau de ladite face de la platine destinée à venir en contact avec le bloc moteur et définissant avantageusement un plan de contact, lesdites formations rapportées par moulage ou surmoulage assurant le blocage mécanique de l'ensemble fonctionnel et des pièces à insérer dans leurs réservations et/ou logements respectifs et constituant des formations participant à ou réalisant l'étanchéité aux gaz entre les portions d'extrémité des tubulures et le bloc culasse, plus particulièrement au niveau de la face ou du plan de contact, ainsi qu'éventuellement entre les tubulures.

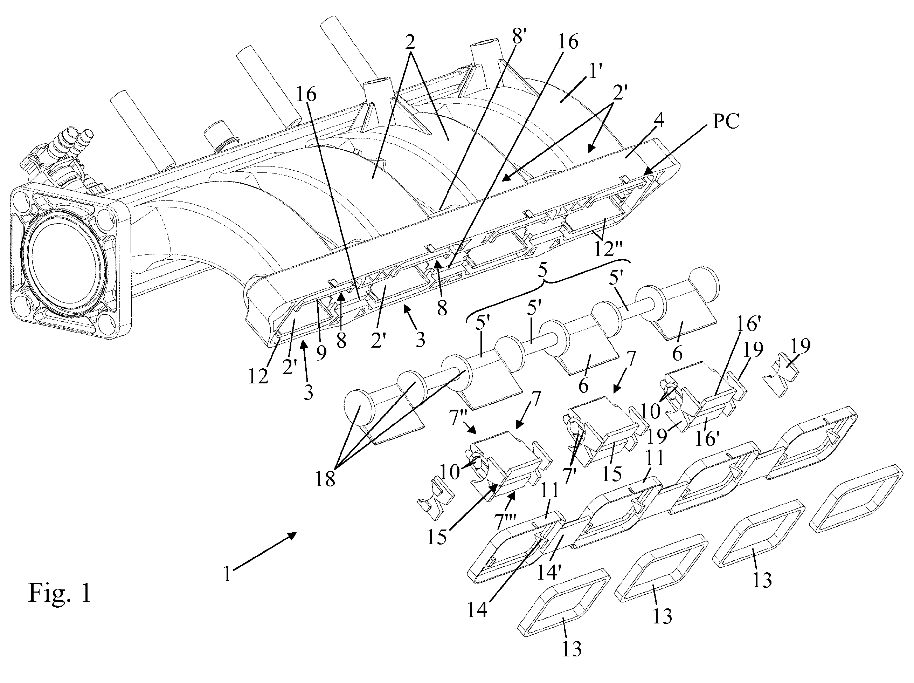

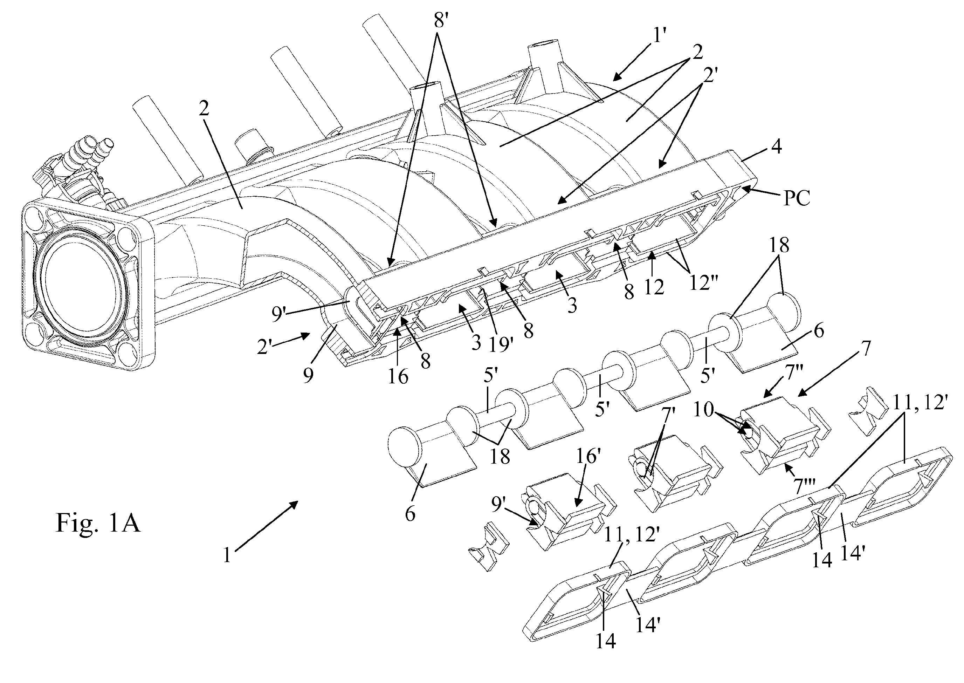

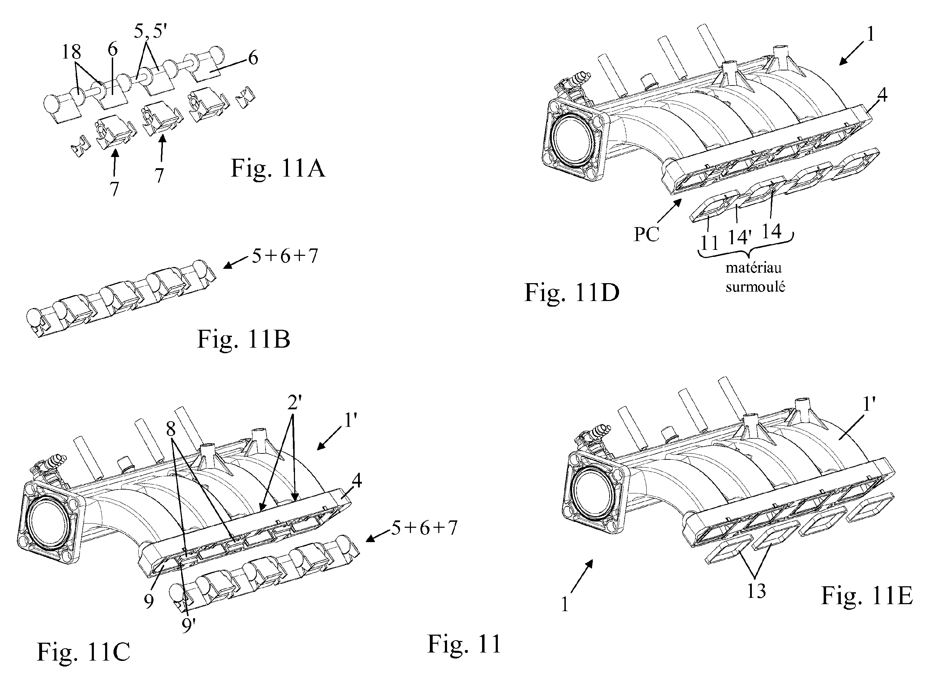

L'invention sera mieux comprise grâce à la description ci-après, qui se rapporte à des modes de réalisation préférés, donnés à titre d'exemples non limitatifs, et expliqués avec référence aux dessins schématiques annexés, dans lesquels :
la figure 1 est une vue éclatée en perspective d'un collecteur ou répartiteur d'admission selon un premier mode de réalisation de l'invention ;
la figure 1A est une vue en perspective éclatée et partiellement en coupe du collecteur de la figure 1 ;
la figure 2 est une vue en perspective du collecteur de la figure 1 à l'issue du procédé de fabrication selon l'invention ;
la figure 3 est une vue à une échelle différente du détail A de la figure 2 ;
la figure 4 est une vue en élévation selon une direction perpendiculaire au plan de contact de la platine du collecteur représenté sur les figures 1 et 2 ;
les figures 5A, 5B et 5C sont des vues partielles en coupe respectivement selon A-A, B-B et D-D de la platine et d'une portion d'extrémité de tubulure du collecteur de la figure 4 ;
la figure 6 est une vue en coupe partielle d'une portion d'extrémité de tubulure similaire à celle de la figure 5B, mais à une échelle différente, selon le premier mode de réalisation de l'invention ;
la figure 7 est une vue à une échelle différente du détail F de la figure 6 ;
les figures 8A et 8B sont des vues en coupe partielle similaires à celle de la figure 6 d'une portion d'extrémité de tubulure selon un second mode de réalisation de l'invention, le clapet étant dans deux positions différentes ;
la figure 9 est une vue à une échelle différente du détail H des figures 8A et 8B ;
la figure 10 est une vue similaire à celles des figures 7 et 9 des détails F et H avant l'opération de surmoulage, et
les figures 11A à 11E sont des vues en perspective illustrant les principales étapes du procédé de fabrication selon un premier mode de réalisation de l'invention.
Les figures des dessins annexés, notamment les figures 1 et 1A en association avec les figures 11A à 11E, illustrent un procédé de fabrication d'un collecteur ou répartiteur d'admission 1 comportant plusieurs tubulures 2 pourvues de clapets de régulation et dont les parties ou portions d'extrémité 2' définissant les ouvertures de sortie 3 sont préférentiellement mutuellement alignées et regroupées en au moins une structure unitaire au niveau d'au moins une platine 4 de fixation et de connexion.

Cette ou chaque platine 4 est adaptée pour le montage dudit collecteur ou répartiteur 1 sur le bloc culasse d'un moteur à combustion interne et définit une face de contact PC, préférentiellement un plan de contact, pour un assemblage étanche avec ledit bloc culasse ou une partie de ce dernier.

Conformément à l'invention, ce procédé consiste à :
- fournir, d'une part, un ensemble fonctionnel [axe 5/clapets 6], d'autre part, des pièces 7 à insérer formant paliers et, enfin, un corps 1' de collecteur ou de répartiteur 1 présentant, au niveau de la platine 4 de fixation et de connexion et des portions d'extrémité 2' des tubulures 2, des réservations et/ou logements 8, 9, 9' pour la réception de l'ensemble fonctionnel 5, 6 et des pièces à insérer 7 précitées ;
- monter les pièces 7 formant paliers sur l'ensemble [axe 5/clapets 6], plus particulièrement sur des segments 5' d'axe s'étendant entre les clapets 6 ;
- mettre en place l'ensemble fonctionnel complété [axe 5/clapets 6/pièces formant paliers 7] dans les portions d'extrémité 2' et les réservations et/ou logements de réception 8, 9,9';
- réaliser un moulage ou surmoulage au niveau de la face de la platine 4 destinée à venir en contact avec le bloc culasse et comportant la face ou le plan de contact PC, le matériau rapporté par moulage ou surmoulage assurant, d'une part, le blocage mécanique des composantes de l'ensemble fonctionnel complété 5, 6, 7 dans leurs réservations et/ou logements 2', 8, 9, 9' les recevant respectivement et constituant, d'autre part, des formations 11, 14, 14' participant à ou réalisant l'étanchéité aux gaz entre les portions d'extrémité 2' des tubulures 2 et le bloc culasse, plus particulièrement au niveau de la face ou du plan de contact PC, ainsi qu'éventuellement entre les tubulures 2.

Ainsi, par la fourniture de pièces 7 formant paliers à insérer, l'invention permet de réaliser un collecteur ou répartiteur d'admission 1 comprenant des organes de régulation 6 intégrés au niveau de la platine 4 avec leur axe support et de commande 5, tout en s'affranchissant d'une fabrication de formes complexes et précises (paliers) au niveau du corps 1' dudit collecteur 1.

Les pièces 7 formant paliers étant rapportées de manière individuelle et séparée sur l'axe 5, entre les clapets 6, elles peuvent être montées individuellement en s'ajustant au plus près à la configuration locale de l'axe 5, des clapets 6 et des sites de réception 8, 9, 9' du corps 1' du collecteur, à la différence d'une pièce complexe d'un seul tenant dont les possibilités d'adaptation locale sont nécessairement plus limitées et le montage ajusté plus délicat.

En outre, l'opération de moulage ou de surmoulage permet de verrouiller le montage rotatoire de l'axe 5 et des clapets 6, et simultanément de finaliser la structure de l'interface au niveau de la face de contact PC, par exemple en contribuant à la qualité de surface de la platine 4 au niveau de cette face et en mettant en place des conditions favorables pour l'obtention d'une bonne étanchéité d'assemblage avec le bloc culasse.

Le procédé de fabrication est de ce fait rendu moins complexe et plus efficient, le montage de l'axe 5, des clapets 6 et des paliers 7 s'effectuant en une seule opération (après leur préassemblage sous forme d'ensemble fonctionnel complété 5 + 6 + 7) et leur blocage étanche à l'état monté étant obtenu par l'intermédiaire d'une unique opération de moulage ou de surmoulage, sans nécessiter de pièce de fixation et sans mettre en oeuvre de substance de collage.

La prévision d'une forme complexe, préférentiellement d'un seul tenant et avec une extension sur sensiblement toute l'étendue de la face de contact PC, combinée à un contact avec emboîtement intime de formes avec les réservations ménagées dans la platine 4 et recouvrement local des composantes 5, 6, 7 de l'ensemble fonctionnel, permet d'aboutir à un accrochage résistant mécaniquement et étanche du matériau surmoulé sur le corps du collecteur.

L'homme du métier comprend bien entendu que l'invention peut s'appliquer à un collecteur ou répartiteur 1 pourvu d'un nombre quelconque de tubulures (2, 3, 4, 6, 8, 12, etc...), ces tubulures 2 pouvant être regroupées en une ou plusieurs structures unitaires correspondant chacune à une platine 4.

La ou chaque platine 4 intègre des sites de fixation sur le bloc culasse (oeillets ou pattes de fixation pour des vis) et présente préférentiellement une forme générale en plaque avec une face de contact plane PC (éventuellement pourvue d'ergots ou de doigts de centrage saillants). Toutefois, et bien que non représentée sur les dessins annexés, une forme non plane de la face de contact PC peut également être envisagée dans le cadre de l'invention.

La description qui suit et les figures annexées concernent plus spécifiquement, mais non limitativement, un collecteur 1 avec une unique platine 4 et quatre tubulures 2.

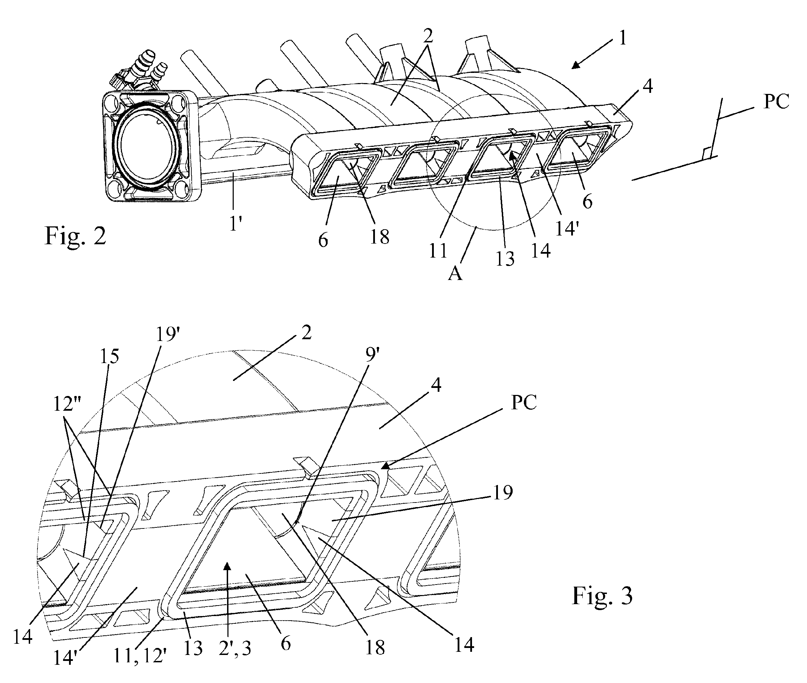

Selon une première caractéristique de l'invention, ressortant plus particulièrement des figures 1, 3, 5A, 5B et 11A à 11C, il peut être prévu de fournir des pièces formant paliers 7 composées chacune de deux branches 7' mutuellement complémentaires, avec des extrémités avant 7" et des extrémités arrière 7"', chaque branche 7' présentant un renfoncement 10 définissant une partie de palier de rotation, à monter les pièces formant paliers 7 sur l'ensemble [axe 5/clapets 6] en rapprochant les deux branches 7' desdites pièces 7 et en enserrant les segments d'axe 5' s'étendant entre deux clapets consécutifs 6 entre les parties de paliers 10 des branches 7' de chacune desdites pièces 7 concernées et à introduire, le cas échéant avec emboîtement sensiblement ajusté, lesdites pièces formant paliers 7 dans des logements 8 adaptés formés ou ménagés dans la platine 4 et situés entre les portions d'extrémité 2' des tubulures 2, ce simultanément avec la mise en place des clapets 6 dans ces dernières, les extrémités avant 7" des branches 7' des pièces formant paliers 7 étant situées au fond desdits logements 8.

La platine 4 considérée présente avantageusement, entre les tubulures 2, des portions de paroi 8' définissant des parties d'enveloppe formant ces logements 8 et les pièces 7 présentent une forme générale en pinces à linge, un verrouillage des deux branches 7' en contact peut être prévu afin d'éviter leur désengagement de l'axe 5, par exemple par enclenchement élastique ("clippage").

En accord avec un premier mode de réalisation de l'invention, représenté aux figures 1 à 7, 10 et 11, le procédé peut consister à fournir des formations 11, 14, 14' moulées ou surmoulées constituant ensemble une structure d'un seul tenant et comprenant, d'une part, des formations annulaires 11 formant ou revêtant des parois 12' de rainures 12 de réception de joints d'étanchéité 13, s'étendant chacune autour d'une ouverture de sortie 3 de tubulure 2, et, d'autre part, des ponts de matière 14, 14' reliant entre eux lesdites formations annulaires 11 et recouvrant les pièces formant paliers 7 en les bloquant dans leurs logements de réception 8 respectifs, lesdites formations 11, 14, 14' étant sensiblement affleurantes au niveau de la face ou du plan de contact PC de la platine 4.

L'opération de surmoulage permet ainsi de finaliser la géométrie des rainures 12 pour un montage optimal des joints 13, ces derniers étant au moins légèrement saillants par rapport au plan PC.

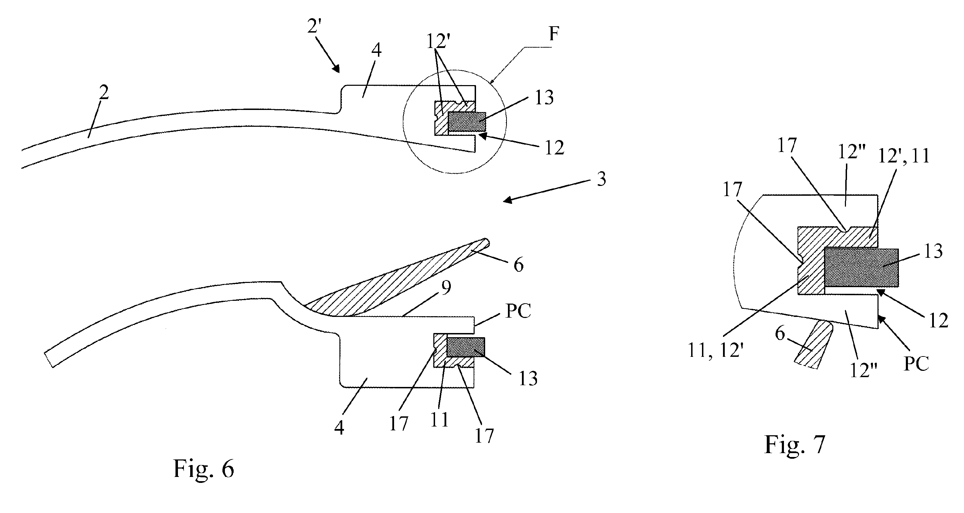

Selon une caractéristique de ce premier mode de réalisation, et comme le montrent les figures 6, 7 et 10, les portions d'extrémité 2' des tubulures 2 comportent, autour des ouvertures de sortie 3, des ébauches de rainures 12 dans lesquelles le matériau de moulage ou de surmoulage des formations annulaires 11 est injecté pour constituer au moins une des parois internes 12' desdites rainures 12, notamment la paroi de fond et/ou la paroi extérieure, les parois 12" de ces ébauches de rainures 12 destinées à être surmoulées comportant des formations saillantes 17, telles que par exemple des nervures à section triangulaire, destinées à favoriser l'accrochage du matériau de moulage ou de surmoulage et l'étanchéité entre ce dernier et la ou les paroi(s) interne(s) 12' en contact avec lui.

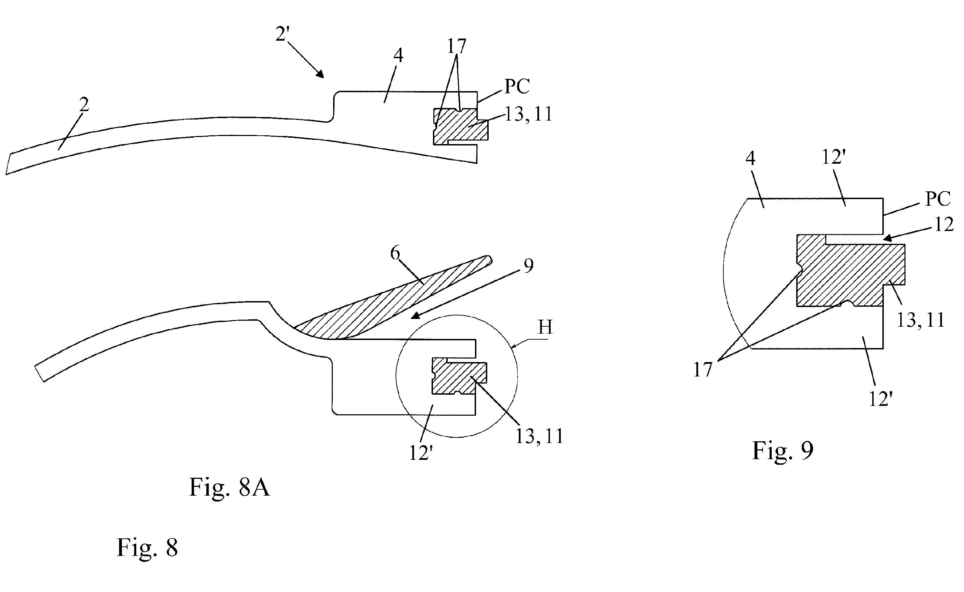

En accord avec un second mode de réalisation de l'invention, ressortant des figures 8A, 8B, 9 et 10, le procédé peut consister à fournir des formations moulées ou surmoulées 11, 14, 14' constituant ensemble une structure d'un seul tenant et comprenant, d'une part, des formations annulaires 11 reçues dans des rainures 12 formées dans la platine 4 et s'étendant chacune autour d'une ouverture de sortie 3 d'une des tubulures 2, et constituant chacune un joint d'étanchéité 13 pour l'ouverture de sortie 3 correspondante, et, d'autre part, des ponts de matière 14, 14' reliant entre eux lesdites formations annulaires 11 et recouvrant les pièces formant paliers 7 en les bloquant dans leurs logements de réception 8 respectifs, lesdites formations 11, 14, 14' étant sensiblement affleurantes au niveau de la face ou du plan de contact PC de la platine 4. Les parties des formations 11 faisant office de joints 13 sont toutefois légèrement saillantes par rapport au plan PC (à l'état non comprimé).

Dans les deux modes de réalisation précités, le surmoulage ou moulage est réalisé de sorte que le matériau de moulage ou de surmoulage des formations annulaires 11 est mis en contact intime avec au moins une des parois internes 12' des rainures 12 respectivement concernées, notamment au moins avec la paroi de fond, ladite ou lesdites paroi(s) 12' comportant des formations saillantes 17, telles que par exemple des nervures à section triangulaire, destinées à favoriser l'accrochage du matériau de moulage ou de surmoulage et l'étanchéité entre ce dernier et la ou les paroi(s) interne(s) 12' en contact avec lui.

De telles formations 17 peuvent éventuellement également être prévues dans les renfoncements en V formant les rainures 15 au niveau des pièces 7 et des renfoncements de la platine 4 permettant la réalisation des formations moulées ou surmoulées 14 et 14'.

Ces mesures et dispositions techniques peuvent en particulier prendre en compte l'enseignement divulgué par les documents FR 2 911 812 et US 2008 211194.

Conformément à une variante constructive avantageuse, ressortant en particulier des figures 1, 5A, 5C et 11, et s'appliquant aux deux modes de réalisation précités, le procédé peut consister à pourvoir les deux branches 7' de chaque pièce formant palier 7 d'extrémités arrière 7'" biseautées de manière à délimiter une rainure 15 en forme de coin entre ces deux branches 7', lorsque ces dernières sont rapprochées de manière à constituer un palier de guidage en rotation, le matériau de surmoulage 14, 14' emplissant les rainures en coin 15 des différentes pièces formant paliers 7, qui sont apparentes au niveau de la face ou du plan de contact PC de la platine 4 lorsque lesdites pièces 7 sont disposées dans leurs logements de réception 8 correspondants.

De même, le procédé peut consister à assurer un calage mécanique et/ou une mise en butée des pièces formant paliers 7 dans leur position de montage ou d'engagement finale dans leurs logements 8 respectifs, par exemple par venue en contact d'épaulements complémentaires 16 et 16', et à recouvrir au moins une partie des extrémités arrière 7'" des branches 7' desdites pièces formant paliers 7, située en retrait par rapport à la face ou au plan de contact PC de la platine 4, avec le matériau de surmoulage.

En accord avec un troisième mode de réalisation de l'invention, non représenté aux dessins annexés, le procédé peut consister à fournir des formations moulées ou surmoulées constituant ensemble une structure d'un seul tenant, comprenant des parties au moins de la platine 4 et éventuellement des parties des tubulures 2, avantageusement au niveau de leurs portions d'extrémité 2' et/ou de leurs ouvertures de sortie 3 respectives, complémentaires du corps 1' de collecteur ou répartiteur, et définissant au moins partiellement la face de contact de la platine 4, ainsi que les moyens d'étanchéité 13 de l'assemblage de ladite platine 4 avec le bloc culasse ou les sites de réception de tels moyens d'étanchéité 13, le matériau de moulage ou de surmoulage étant compatible avec le matériau constituant le corps 1' de collecteur ou répartiteur, préférentiellement identique à ce dernier.

Préférentiellement, le matériau thermoplastique de moulage ou de surmoulage constituant les formations 11, 14, 14' est sélectionné pour être compatible avec le matériau thermoplastique formant le corps 1' de collecteur ou répartiteur et pour présenter une température de ramollissement sensiblement équivalente à celle de ce dernier matériau, de manière à entraîner au moins un ramollissement superficiel, avantageusement une refusion superficielle avec mélange des phases, dudit matériau du corps 1' de collecteur ou répartiteur, en particulier une refusion partielle des formations saillantes 17, les matériaux des formations 11, 14, 14' et du corps l'étant préférentiellement identiques.

Pour la réalisation de l'ensemble axe 5/clapets 6, plusieurs variantes peuvent être envisagées.

Ainsi, l'axe 5 et les clapets 6 peuvent être réalisés en un matériau métallique.

Toutefois, de manière avantageuse, il peut être prévu de réaliser l'ensemble [axe 5/clapets 6] par surmoulage des clapets 6, en partie ou en totalité, sur l'axe 5, ce dernier comportant éventuellement des armatures de clapets prémontés.

Préférentiellement, il est prévu de réaliser l'ensemble [axe 5/clapets 6] en une seule pièce par moulage, ledit ensemble 5, 6 unitaire comprenant une succession alternée de clapets 6 et de segments d'axe 5' d'un seul tenant.

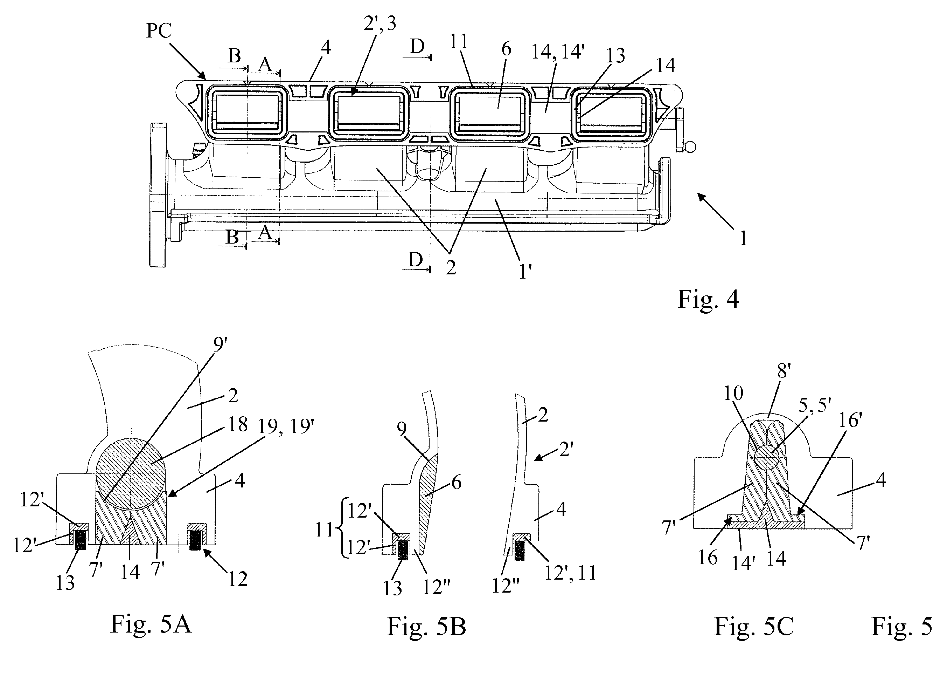

Conformément à une variante constructive pratique favorable, notamment en termes de limitation des pertes de charge dans les tubulures 2, les clapets 6 sont positionnés de manière désaxée par rapport à l'axe ou aux segments d'axe 5 et chacune des portions d'extrémité 2' des tubulures 2 comporte un renfoncement interne 9 dont l'empreinte présente une forme conjuguée à celle du clapet 6 monté dans ladite portion d'extrémité 2' (Figures 5B, 6, 8A et 8B).

Comme le montrent les figures 1, 5A et 11A à 11C, il peut être prévu alors de réaliser, lors du surmoulage ou du moulage, des formations discoïdales 18 de part et d'autre de chaque clapet 6, ces formations 18 étant centrées par rapport à l'axe 5 portant les clapets 6 ou par rapport au segment d'axe 5' attenant au clapet 6 considéré, en présentant un diamètre supérieur audit axe 5 ou segment 5'.

Ces formations discoïdales 18 assurent la liaison entre les segments d'axe 5' et les clapets 6, sans entraver la faculté de rotation autour de l'axe 5.

Afin d'aboutir à un montage imbriqué et calé entre l'ensemble 5 et 6, les tubulures 2 et les pièces 7, les portions d'extrémité 2' des tubulures 2 et les pièces formant paliers 7 comportent des réservations latérales 9' respectives définissant par coopération mutuelle après mise en place desdites pièces 7 dans leurs logements 8 respectifs, des sites dégagés ou réservations pour la réception ajustée avec faculté de rotation desdites formations discoïdales 18, ces dernières assurant la continuité de la face interne des portions d'extrémité 2' des tubulures 2 concernées.

Les formations 18 participent ainsi également à l'étanchéité au niveau des paliers de rotation (création de chicanes) et au blocage axial des clapets 6.

Préférentiellement, il est en outre prévu que le corps de collecteur 1', l'ensemble [axe 5/clapets 6] et les pièces formant paliers 7 sont réalisés en un matériau thermoplastique, éventuellement chargé, en ce que le corps de collecteur l'est obtenu par assemblage d'au moins deux parties constitutives élémentaires, par soudure par vibration, collage ou autre, que les deux branches 7' des pièces 7 formant paliers sont reliées, au niveau de leurs extrémités avant 7", par un voile de matière formant charnière et en ce qu'après l'opération de surmoulage, il est procédé éventuellement à la mise en place des joints d'étanchéité 13 au niveau des rainures 12 s'étendant autour des ouvertures de sortie 3 des tubulures 2 et à la mise en place des accessoires fonctionnels et de fixation du collecteur 1.

L'invention a également pour objet un collecteur ou répartiteur d'admission 1 comportant plusieurs tubulures 2 dont les portions d'extrémité 2' définissant les ouvertures de sortie 3 sont préférentiellement mutuellement alignées et regroupées en au moins une structure unitaire au niveau d'au moins une platine 4 de fixation et de connexion pour le montage étanche dudit collecteur ou répartiteur 1 sur le bloc culasse d'un moteur à combustion interne.

Ladite ou chaque platine 4 définit une face de contact PC, préférentiellement un plan de contact avec ledit bloc culasse et ledit collecteur ou répartiteur comporte un ensemble [axe 5/clapets 6] monté dans lesdites portions d'extrémité des tubulures et dans ladite platine, dans des réservations et/ou des logements correspondants 8, 9, 9'.

Conformément à l'invention, ce collecteur ou répartiteur 1 comprend, d'une part, des pièces 7 formant paliers de guidage en rotation de l'ensemble [axe 5/clapets 6] sous la forme d'inserts montés dans des logements de réception correspondants 8 et, d'autre part, des formations 11, 14, 14' de matériau surmoulé au niveau de ladite face de la ou de chaque platine 4 destinée à venir en contact avec le bloc moteur et définissant avantageusement un plan de contact PC, lesdites formations 11, 14, 14' rapportées par moulage ou surmoulage assurant le blocage mécanique de l'ensemble fonctionnel 5, 6 et des pièces à insérer 7 dans leurs réservations et/ou logements 2', 8, 9, 9' respectifs et constituant des formations 11, 14, 14' participant à ou réalisant l'étanchéité aux gaz entre les portions d'extrémité 2' des tubulures 2 et le bloc culasse, plus particulièrement au niveau de la face ou du plan de contact PC, ainsi qu'éventuellement entre les tubulures 2.

Selon une première caractéristique constructive, chaque pièce formant palier 7 peut être constituée de deux branches 7' présentant chacune un renfoncement 10 semi-cylindrique, définissant des parties de palier de rotation cylindrique complémentaires, lesdites pièces formant paliers 7 étant montées avec emboîtement ajusté dans leurs logements 8 respectifs, en enserrant les segments d'axe 5 au niveau des renfoncements 10 en regard de leurs paires de branches 7' en contact et en étant bloquées en position dans leurs logements 8 par le matériau moulé ou surmoulé.

Selon un premier mode de réalisation (figures 1 à 7 et 11), les formations 11, 14, 14' de matériau moulé ou surmoulé constituent ensemble une structure d'un seul tenant qui intègre, d'une part, des formations annulaires 11 formant ou revêtant des parois 12' de rainures 12 de réception de joints d'étanchéité 13, s'étendant chacune autour d'une ouverture 3 de tubulure 2, et, d'autre part, des ponts de matière 14, 14' reliant entre eux lesdites formations annulaires 11 et recouvrant les pièces formant paliers 7 en les bloquant dans leurs logements de réception 8 respectifs, lesdites formations 11, 14, 14' étant sensiblement affleurantes au niveau de la face ou du plan de contact PC de la platine 4.

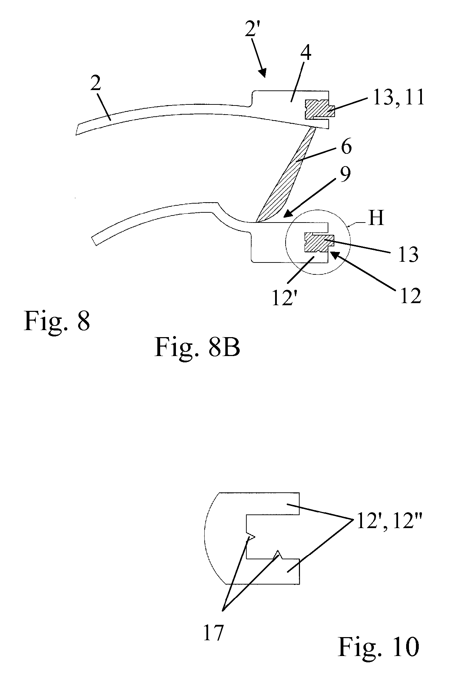

Selon un second mode de réalisation (figures 8A, 8B et 9), les formations 11, 14, 14' de matériau moulé ou surmoulé constituent ensemble une structure d'un seul tenant qui intègrent, d'une part, des formations annulaires 11 reçues dans des rainures 12 formées dans la platine 4 et s'étendant chacune autour d'une ouverture de sortie 3 d'une des tubulures 2, et constituant chacune un joint d'étanchéité 13 pour l'ouverture de sortie 3 correspondante, et, d'autre part, des ponts de matière 14, 14' reliant entre eux lesdites formations annulaires 11 et recouvrant les pièces formant paliers 7 en les bloquant dans leurs logements de réception 8 respectifs, lesdites formations 11, 14, 14' étant sensiblement affleurantes au niveau de la face ou du plan de contact PC de la platine 4.

Avantageusement, les pièces formant paliers 7 présentent, au niveau des extrémités arrière 7'" de leurs branches 7' proches de la face ou du plan de contact PC, une rainure 15 à section triangulaire ou en coin, délimitée par des biseaux en regard desdites branches 7', les ponts de matière 14, 14' formés par le matériau moulé ou surmoulé intégrant des formations en coin 14 s'étendant de manière ajustée dans ces rainures 15.

En outre, chaque pièce formant palier 7 est pourvue d'au moins un épaulement 16' ou analogue, par exemple sous la forme d'ailes latérales, en contact avec au moins un épaulement 16 conjugué du logement de réception 8 correspondant et en ce qu'au moins une partie des extrémités arrière 7'" des branches 7' de chaque pièce 7 est située en retrait par rapport à la face ou au plan de contact PC de la platine 4 et est recouverte par une portion 14' de matériau de surmoulage sensiblement en forme de plaque, faisant partie d'un pont de matière et sensiblement affleurant avec la face ou le plan de contact PC.

Conformément à une réalisation pratique avantageuse, mais non limitative, l'ensemble [axe 5/clapets 6] est une pièce d'un seul tenant venue de moulage, comprenant une succession alternée de clapets 6 et de segments d'axe 5 d'un seul tenant, en ce qu'il comporte des formations discoïdales 18 de part et d'autre de chaque clapet 6 (en étant préférentiellement formé d'un seul tenant avec ces dernières), ces formations 18 étant centrées par rapport à l'axe 5 portant les clapets 6 ou par rapport au segment d'axe 5 attenant au clapet 6 considéré, en présentant un diamètre supérieur audit axe ou segment 5. De plus, les portions d'extrémités 2' des tubulures 2 et les pièces formant paliers 7 comportent des réservations latérales 9' respectives définissant, par coopération mutuelle, des sites dégagés ou réservations pour la réception ajustée avec faculté de rotation desdites formations discoïdales 18, ces dernières assurant la continuité de la face interne des portions d'extrémité 2' des tubulures 2 concernées.

Ainsi, l'invention repose essentiellement sur la réalisation d'un moulage ou surmoulage au niveau de la face destinée à venir en contact avec le bloc culasse, ce pour assurer simultanément, d'une part, un blocage mécanique de l'ensemble [axe + clapets + paliers] dans leur logement et, d'autre part, une étanchéité au gaz au niveau du plan de contact avec le bloc culasse, et éventuellement entre les différentes tubulures.

Les pièces 7 formant paliers, qui présentent avantageusement une forme générale en coin, peuvent également comporter sur leurs côtés latéraux opposés des patins 19 de guidage et de montage calé, destinés à coopérer avec des réservations 19' de forme complémentaire ménagées dans les côtés latéraux des logements 8. Ces patins 19 définissent préférentiellement les réservations 9' partielles pour les formations 18.

Les rainures 15 peuvent avantageusement se prolonger au niveau de ces patins 19 (ces patins étant, par exemple, formés de deux parties dont chacune est portée par une branche 7') et des patins isolés (n'appartenant pas à une pièce 7) peuvent être prévus pour les formations 18 aux extrémités de l'axe 5 (voir figure 1).

Comme le montrent les figures 1 et 11 notamment, les clapets 6 peuvent être positionnés de manière désaxée par rapport à l'axe ou aux segments d'axe 5 et chacune des portions d'extrémité 2' des tubulures 2 peut comporter un renfoncement interne 9 dont l'empreinte présente une forme conjuguée à celle du clapet 6 monté dans ladite portion d'extrémité 2'.

Selon des dispositions additionnelles selon l'invention, le corps de collecteur 1', l'ensemble [axe 5/clapets 6] et les pièces formant paliers 7 sont réalisés en un matériau thermoplastique, éventuellement chargé, le matériau moulé ou surmoulé étant compatible avec ledit matériau thermoplastique précité, et préférentiellement identique à ce dernier, le corps de collecteur l'est obtenu par assemblage d'au moins deux parties constitutives élémentaires, par soudure par vibration, collage ou autre, et les deux branches 7' des pièces 7 formant paliers sont reliées, au niveau de leurs extrémités avant 7", par un voile de matière formant charnière.

Ce collecteur ou répartiteur 1 décrit ci-dessus est préférentiellement obtenu par l'intermédiaire du procédé de fabrication dont les caractéristiques ont été exposées précédemment.

Enfin, l'invention concerne également un véhicule automobile à moteur à combustion interne, caractérisé en ce que son système d'admission comprend un collecteur ou répartiteur 1 tel que décrit ci-dessus.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Procédé de fabrication d'un collecteur ou répartiteur d'admission comportant plusieurs tubulures pourvues de clapets de régulation et dont les parties d'extrémité définissant les ouvertures de sortie sont préférentiellement mutuellement alignées et regroupées en au moins une structure unitaire au niveau d'au moins une platine de fixation et de connexion, adaptée pour le montage dudit collecteur ou répartiteur sur le bloc culasse d'un moteur à combustion interne, ladite ou chaque platine définissant une face de contact, préférentiellement un plan de contact, pour un assemblage étanche avec ledit bloc culasse ou une partie de ce dernier, ce procédé consistant principalement à :
- fournir, d'une part, un ensemble fonctionnel axe (5)/clapets (6), d'autre part, des pièces (7) à insérer formant paliers et, enfin, un corps (1') de collecteur ou de répartiteur (1) présentant, au niveau de la platine (4) de fixation et de connexion et des portions d'extrémité (2') des tubulures (2), des réservations et/ou logements (8, 9, 9') pour la réception de l'ensemble fonctionnel (5, 6) et des pièces à insérer (7) précitées, les pièces formant paliers (7) étant composées chacune de deux branches (7') mutuellement complémentaires, avec des extrémités avant (7") et des extrémités arrière (7"'), chaque branche (7') présentant un renfoncement (10) définissant une partie de palier de rotation ;
- monter les pièces (7) formant paliers sur l'ensemble axe (5)/clapets (6), plus particulièrement sur des segments (5') d'axe s'étendant entre les clapets (6), ce montage s'effectuant en rapprochant les deux branches (7') desdites pièces (7) et en enserrant les segments d'axe (5') s'étendant entre deux clapets consécutifs (6) entre les parties de paliers (10) des branches (7') de chacune desdites pièces (7) concernées ;
- mettre en place l'ensemble fonctionnel complété axe (5)/clapets (6)/pièces formant paliers (7) dans les portions d'extrémité (2') et les réservations et/ou logements de réception (8, 9, 9'), en introduisant lesdites pièces formant paliers (7) dans des logements (8) adaptés formés ou ménagés dans la platine (4) et situés entre les portions d'extrémité (2') des tubulures (2), les extrémités avant (7") des branches (7') des pièces formant paliers (7) étant situées au fond desdits logements (8) ;
- réaliser un moulage ou surmoulage au niveau de la face de la platine (4) destinée à venir en contact avec le bloc culasse et comportant la face ou le plan de contact (PC), le matériau rapporté par moulage ou surmoulage assurant, d'une part, le blocage mécanique des composantes de l'ensemble fonctionnel complété (5, 6, 7) dans leurs réservations et/ou logements (2', 8, 9, 9') les recevant respectivement et constituant, d'autre part, des formations (11, 14, 14') participant à ou réalisant l'étanchéité aux gaz entre les portions d'extrémité (2') des tubulures (2) et le bloc culasse, plus particulièrement au niveau de la face ou du plan de contact (PC), ainsi qu'éventuellement entre les tubulures (2).

2. Procédé selon la revendication 1, **caractérisé en ce que** l'introduction des pièces formant paliers (7) dans les logements (8) est réalisé avec un emboîtement sensiblement ajusté et simultanément avec la mise en place des clapets (6) dans les extrémités (2') des tubulures (2).

3. Procédé selon l'une quelconque des revendications 1 et 2, **caractérisé en ce qu'**il consiste à fournir des formations (11, 14, 14') moulées ou surmoulées constituant ensemble une structure d'un seul tenant et comprenant, d'une part, des formations annulaires (11) formant ou revêtant des parois (12') de rainures (12) de réception de joints d'étanchéité (13), s'étendant chacune autour d'une ouverture de sortie (3) de tubulure (2), et, d'autre part, des ponts de matière (14, 14') reliant entre eux lesdites formations annulaires (11) et recouvrant les pièces formant paliers (7) en les bloquant dans leurs logements de réception (8) respectifs, lesdites formations (11, 14, 14') étant sensiblement affleurantes au niveau de la face ou du plan de contact (PC) de la platine (4).

4. Procédé selon l'une quelconque des revendications 1 et 2, **caractérisé en ce qu'**il consiste à fournir des formations moulées ou surmoulées (11, 14, 14') constituant ensemble une structure d'un seul tenant et comprenant, d'une part, des formations annulaires (11) reçues dans des rainures (12) formées dans la platine (4) et s'étendant chacune autour d'une ouverture de sortie (3) d'une des tubulures (2), et constituant chacune un joint d'étanchéité (13) pour l'ouverture de sortie (3) correspondante, et, d'autre part, des ponts de matière (14, 14') reliant entre eux lesdites formations annulaires (11) et recouvrant les pièces formant paliers (7) en les bloquant dans leurs logements de réception (8) respectifs, lesdites formations (11, 14, 14') étant sensiblement affleurantes au niveau de la face ou du plan de contact (PC) de la platine (4).

5. Procédé selon les revendications 2 et 3 ou 2 et 4, **caractérisé en ce qu'**il consiste à pourvoir les deux branches (7') de chaque pièce formant palier (7) d'extrémités arrière (7"') biseautées de manière à délimiter une rainure (15) en forme de coin entre ces deux branches (7'), lorsque ces dernières sont rapprochées de manière à constituer un palier de guidage en rotation, le matériau de surmoulage (14, 14') emplissant les rainures en coin (15) des différentes pièces formant paliers (7), qui sont apparentes au niveau de la face ou du plan de contact (PC) de la platine (4) lorsque lesdites pièces (7) sont disposées dans leurs logements de réception (8) correspondants.

6. Procédé selon l'une quelconque des revendications 2 à 5, **caractérisé en ce qu'**il consiste à assurer un calage mécanique et/ou une mise en butée des pièces formant paliers (7) dans leur position de montage ou d'engagement finale dans leurs logements (8) respectifs, par exemple par venue en contact d'épaulements complémentaires (16 et 16'), et à recouvrir au moins une partie des extrémités arrière (7"') des branches (7') desdites pièces formant paliers (7), située en retrait par rapport à la face ou au plan de contact (PC) de la platine (4), avec le matériau de surmoulage.

7. Procédé selon l'une quelconque des revendications 3, 5 et 6, **caractérisé en ce que** les portions d'extrémités (2') des tubulures (2) comportent, autour des ouvertures de sortie (3), des ébauches de rainures (12) dans lesquelles le matériau de moulage ou de surmoulage des formations annulaires (11) est injecté pour constituer au moins une des parois internes (12') desdites rainures (12), notamment la paroi de fond et/ou la paroi extérieure, les parois (12") de ces ébauches de rainures (12) destinées à être surmoulées comportant des formations saillantes (17), telles que par exemple des nervures à section triangulaire, destinées à favoriser l'accrochage du matériau de moulage ou de surmoulage et l'étanchéité entre ce dernier et la ou les paroi(s) interne(s) (12') en contact avec lui.

8. Procédé selon l'une quelconque des revendications 4 et 5, **caractérisé en ce que** le matériau de moulage ou de surmoulage des formations annulaires (11) est mis en contact intime avec au moins une des parois internes (12') des rainures (12) respectivement concernées, notamment au moins avec la paroi de fond, ladite ou lesdites paroi(s) (12') comportant des formations saillantes (17), telles que par exemple des nervures à section triangulaire, destinées à favoriser l'accrochage du matériau de moulage ou de surmoulage et l'étanchéité entre ce dernier et la ou les paroi(s) interne(s) (12') en contact avec lui.

9. Procédé selon l'une quelconque des revendications 7 et 8, **caractérisé en ce que** le matériau thermoplastique de moulage ou de surmoulage constituant les formations (11, 14, 14') est sélectionné pour être compatible avec le matériau thermoplastique formant le corps (1') de collecteur ou répartiteur et pour présenter une température de ramollissement sensiblement équivalente à celle de ce dernier matériau, de manière à entraîner au moins un ramollissement superficiel, avantageusement une refusion superficielle avec mélange des phases, dudit matériau du corps (1') de collecteur ou répartiteur, en particulier une refusion partielle des formations saillantes (17), les matériaux des formations (11, 14, 14') et du corps (1') étant préférentiellement identiques.

10. Procédé selon l'une quelconque des revendications 1 et 2, **caractérisé en ce qu'**il consiste à fournir des formations moulées ou surmoulées constituant ensemble une structure d'un seul tenant, comprenant des parties au moins de la platine (4) et éventuellement des parties des tubulures (2), avantageusement au niveau de leurs portions d'extrémité (2') et/ou de leurs ouvertures de sortie (3) respectives, complémentaires du corps (1') de collecteur ou répartiteur, et définissant au moins partiellement la face de contact de la platine (4), ainsi que les moyens d'étanchéité (13) de l'assemblage de ladite platine (4) avec le bloc culasse ou les sites de réception de tels moyens d'étanchéité (13), le matériau de moulage ou de surmoulage étant compatible avec le matériau constituant le corps (1') de collecteur ou répartiteur, préférentiellement identique à ce dernier.

11. Procédé selon l'une quelconque des revendications 1 à 10, **caractérisé en ce qu'**il consiste à réaliser l'ensemble axe (5)/clapets (6) par surmoulage des clapets (6), en partie ou en totalité, sur l'axe (5), ce dernier comportant éventuellement des armatures de clapets prémontés.

12. Procédé selon l'une quelconque des revendications 1 à 10, **caractérisé en ce qu'**il consiste à réaliser l'ensemble axe (5)/clapets (6) en une seule pièce par moulage, ledit ensemble (5, 6) unitaire comprenant une succession alternée de clapets (6) et de segments d'axe (5') d'un seul tenant.

13. Procédé selon l'une quelconque des revendications 11 et 12, **caractérisé en ce que** les clapets (6) sont positionnés de manière désaxée par rapport à l'axe ou aux segments d'axe (5) et **en ce que** chacune des portions d'extrémité (2') des tubulures (2) comporte un renfoncement interne (9) dont l'empreinte présente une forme conjuguée à celle du clapet (6) monté dans ladite portion d'extrémité (2').

14. Procédé selon l'une quelconque des revendications 11 à 13, **caractérisé en ce qu'**il consiste à réaliser, lors du surmoulage ou du moulage, des formations discoïdales (18) de part et d'autre de chaque clapet (6), ces formations (18) étant centrées par rapport à l'axe (5) portant les clapets (6) ou par rapport au segment d'axe (5') attenant au clapet (6) considéré, en présentant un diamètre supérieur audit axe (5) ou segment (5').

15. Procédé selon la revendication 14, **caractérisé en ce que** les portions d'extrémité (2') des tubulures (2) et les pièces formant paliers (7) comportent des réservations latérales (9') respectives définissant par coopération mutuelle après mise en place desdites pièces (7) dans leurs logements (8) respectifs, des sites dégagés ou réservations pour la réception ajustée avec faculté de rotation desdites formations discoïdales (18), ces dernières assurant la continuité de la face interne des portions d'extrémité (2') des tubulures (2) concernées.

16. Procédé selon l'une quelconque des revendications 1 à 15, **caractérisé en ce que** le corps de collecteur (1'), l'ensemble axe (5)/clapets (6) et les pièces formant paliers (7) sont réalisés en un matériau thermoplastique, éventuellement chargé, **en ce que** le corps de collecteur (1') est obtenu par assemblage d'au moins deux parties constitutives élémentaires, par soudure par vibration, collage ou autre, **en ce que** les deux branches (7') des pièces (7) formant paliers sont reliées, au niveau de leurs extrémités avant (7"), par un voile de matière formant charnière et **en ce qu'**après l'opération de surmoulage, il est procédé éventuellement à la mise en place des joints d'étanchéité (13) au niveau des rainures (12) s'étendant autour des ouvertures de sortie (3) des tubulures (2) et à la mise en place des accessoires fonctionnels et de fixation du collecteur (1).

17. Collecteur ou répartiteur d'admission comportant plusieurs tubulures dont les portions d'extrémité définissant les ouvertures de sortie sont préférentiellement mutuellement alignées et regroupées en au moins une structure unitaire au niveau d'au moins une platine de fixation et de connexion pour le montage étanche dudit collecteur ou répartiteur sur le bloc culasse d'un moteur à combustion interne, ladite ou chaque platine définissant une face de contact, préférentiellement un plan de contact avec ledit bloc culasse, ledit collecteur ou répartiteur comportant un ensemble [axe/clapets] monté dans lesdites portions d'extrémité des tubulures et dans ladite platine, dans des réservations et/ou des logements correspondants,
collecteur ou répartiteur (1) **caractérisé en ce qu'**il comprend, d'une part, des pièces (7) formant paliers de guidage en rotation de l'ensemble axe (5)/clapets (6) sous la forme d'inserts montés dans des logements de réception correspondants (8) et, d'autre part, des formations (11, 14, 14') de matériau surmoulé au niveau de ladite face de la platine (4) destinée à venir en contact avec le bloc moteur et définissant avantageusement un plan de contact (PC), lesdites formations (11, 14, 14') rapportées par moulage ou surmoulage assurant le blocage mécanique de l'ensemble fonctionnel (5, 6) et des pièces à insérer (7) dans leurs réservations et/ou logements (2', 8, 9, 9') respectifs et constituant des formations (11, 14, 14') participant à ou réalisant l'étanchéité aux gaz entre les portions d'extrémité (2') des tubulures (2) et le bloc culasse, plus particulièrement au niveau de la face ou du plan de contact (PC), ainsi qu'éventuellement entre les tubulures (2), et **en ce que** les pièces formant paliers (7) sont composées chacune de deux branches (7') mutuellement complémentaires, avec des extrémités avant (7") et des extrémités arrière (7"'), chaque branche (7') présentant un renfoncement (10) définissant une partie de palier de rotation, lesdites parties de paliers (10) enserrant les segments d'axe (5') s'étendant entre deux clapets consécutifs (6) et les pièces formant paliers (7) étant emboîtées dans des logements (8) adaptés formés ou ménagés dans la platine (4) et situés entre les portions d'extrémité (2') des tubulures (2), les extrémités avant (7") des branches (7') des pièces formant paliers (7) étant situées au fond desdits logements (8).

18. Collecteur ou répartiteur selon la revendication 17, **caractérisé en ce que** chaque pièce formant palier (7) est constituée de deux branches (7') présentant chacune un renfoncement (10) semi-cylindrique, définissant des parties de palier de rotation cylindrique complémentaires, lesdites pièces formant paliers (7) étant montées avec emboîtement ajusté dans leurs logements (8) respectifs, en enserrant les segments d'axe (5) au niveau des renfoncements (10) en regard de leurs paires de branches (7') en contact et en étant bloquées en position dans leurs logements (8) par le matériau moulé ou surmoulé.

19. Collecteur ou répartiteur selon l'une quelconque des revendications 17 et 18, **caractérisé en ce que** les formations (11, 14, 14') de matériau moulé ou surmoulé constituent ensemble une structure d'un seul tenant qui intègre, d'une part, des formations annulaires (11) formant ou revêtant des parois (12') de rainures (12) de réception de joints d'étanchéité (13), s'étendant chacune autour d'une ouverture (3) de tubulure (2), et, d'autre part, des ponts de matière (14, 14') reliant entre eux lesdites formations annulaires (11) et recouvrant les pièces formant paliers (7) en les bloquant dans leurs logements de réception (8) respectifs, lesdites formations (11, 14, 14') étant sensiblement affleurantes au niveau de la face ou du plan de contact (PC) de la platine (4).

20. Collecteur ou répartiteur selon l'une quelconque des revendications 17 et 18, **caractérisé en ce que** les formations (11, 14, 14') de matériau moulé ou surmoulé constituent ensemble une structure d'un seul tenant qui intègrent, d'une part, des formations annulaires (11) reçues dans des rainures (12) formées dans la platine (4) et s'étendant chacune autour d'une ouverture de sortie (3) d'une des tubulures (2), et constituant chacune un joint d'étanchéité (13) pour l'ouverture de sortie (3) correspondante, et, d'autre part, des ponts de matière (14, 14') reliant entre eux lesdites formations annulaires (11) et recouvrant les pièces formant paliers (7) en les bloquant dans leurs logements de réception (8) respectifs, lesdites formations (11, 14, 14') étant sensiblement affleurantes au niveau de la face ou du plan de contact (PC) de la platine (4).

21. Collecteur ou répartiteur selon les revendications 18 à 20, **caractérisé en ce que** les pièces formant paliers (7) présentent, au niveau des extrémités arrière (7"') de leurs branches (7') proches de la face ou du plan de contact (PC), une rainure (15) à section triangulaire ou en coin, délimitée par des biseaux en regard desdites branches (7'), les ponts de matière (14, 14') formés par le matériau moulé ou surmoulé intégrant des formations en coin (14) s'étendant de manière ajustée dans ces rainures (15).

22. Collecteur ou répartiteur selon l'une quelconque des revendications 18 à 21, **caractérisé en ce que** chaque pièce formant palier (7) est pourvue d'au moins un épaulement (16') ou analogue, par exemple sous la forme d'ailes latérales, en contact avec au moins un épaulement (16) conjugué du logement de réception (8) correspondant et **en ce qu'**au moins une partie des extrémités arrière (7"') des branches (7') de chaque pièce (7) est située en retrait par rapport à la face ou au plan de contact (PC) de la platine (4) et est recouverte par une portion (14') de matériau de surmoulage sensiblement en forme de plaque, faisant partie d'un pont de matière et sensiblement affleurant avec la face ou le plan de contact (PC).

23. Collecteur ou répartiteur selon l'une quelconque des revendications 17 à 22, **caractérisé en ce que** l'ensemble axe (5)/clapets (6) est une pièce d'un seul tenant venue de moulage, comprenant une succession alternée de clapets (6) et de segments d'axe (5) d'un seul tenant, **en ce qu'**il comporte des formations discoïdales (18) de part et d'autre de chaque clapet (6), ces formations (18) étant centrées par rapport à l'axe (5) portant les clapets (6) ou par rapport au segment d'axe (5) attenant au clapet (6) considéré, en présentant un diamètre supérieur audit axe ou segment (5), et **en ce que** les portions d'extrémités (2') des tubulures (2) et les pièces formant paliers (7) comportent des réservations latérales (9') respectives définissant, par coopération mutuelle, des sites dégagés ou réservations pour la réception ajustée avec faculté de rotation desdites formations discoïdales (18), ces dernières assurant la continuité de la face interne des portions d'extrémité (2') des tubulures (2) concernées.

24. Collecteur ou répartiteur selon l'une quelconque des revendications 17 à 23, **caractérisé en ce que** les clapets (6) sont positionnés de manière désaxée par rapport à l'axe ou aux segments d'axe (5) et **en ce que** chacune des portions d'extrémité (2') des tubulures (2) comporte un renfoncement interne (9) dont l'empreinte présente une forme conjuguée à celle du clapet (6) monté dans ladite portion d'extrémité (2').

25. Collecteur ou répartiteur selon l'une quelconque des revendications 17 à 24, **caractérisé en ce que** le corps de collecteur (1'), l'ensemble axe (5)/clapets (6) et les pièces formant paliers (7) sont réalisés en un matériau thermoplastique, éventuellement chargé, le matériau moulé ou surmoulé étant compatible avec ledit matériau thermoplastique précité, et préférentiellement identique à ce dernier, **en ce que** le corps de collecteur (1') est obtenu par assemblage d'au moins deux parties constitutives élémentaires, par soudure par vibration, collage ou autre, et **en ce que** les deux branches (7') des pièces (7) formant paliers sont reliées, au niveau de leurs extrémités avant (7"), par un voile de matière formant charnière.

26. Collecteur ou répartiteur d'admission selon l'une quelconque des revendications 17 à 25, **caractérisé en ce qu'**il est obtenu par l'intermédiaire du procédé de fabrication selon l'une quelconque des revendications 1 à 16.

27. Véhicule automobile à moteur à combustion interne, **caractérisé en ce que** son système d'admission comprend un collecteur ou répartiteur selon l'une quelconque des revendications 17 à 26.

## Patentansprüche

1. Verfahren zur Herstellung eines Ansaugkrümmers oder -verteilers, umfassend mehrere Rohrleitungen, die mit Regelklappen versehen sind und deren Endabschnitte, die die Ausgangsöffnungen definieren, vorzugsweise wechselseitig ausgerichtet und zu mindestens einer Einheitsstruktur im Bereich mindestens einer Befestigungs- und Anschlussplatine zusammengefasst sind, die für die Montage des Ansaugkrümmers oder -verteilers auf dem Zylinderkopfblock eines Verbrennungsmotors vorgesehen ist, wobei die oder jede Platine eine Kontaktfläche, vorzugsweise eine Kontaktebene, für einen dichten Zusammenbau mit dem Zylinderkopfblock oder einem Teil dieses letztgenannten definiert, wobei dieses Verfahren hauptsächlich darin besteht:
- einerseits eine Funktionseinheit Achse (5)/Klappen (6) und andererseits Einsatzstücke (7), die Lager bilden, und schließlich einen Körper (1') eines Ansaugkrümmers oder -verteilers (1) bereitzustellen, der im Bereich der Befestigungs- und Anschlussplatine (4) und der Endabschnitte (2') Rohrleitungen (2), Ausnehmungen und/oder Lagerungen (8, 9, 9') für die Aufnahme der Funktionseinheit (5, 6) und der vorgenannten Einsatzstücke (7) aufweist, wobei die Lager bildenden Stücke (7) jeweils aus zwei wechselseitig komplementären Schenkeln (7') mit vorderen Enden (7") und hinteren Enden (7"") bestehen, wobei jeder Schenkel (7') eine Verstärkung (10) aufweist, die einen Drehlagerabschnitt definiert;
- die Lager bildenden Stücke (7) auf der Einheit Achse (5)/Klappen (6), insbesondere auf sich zwischen den Klappen (6) erstreckenden Achssegmenten (5') zu montieren, wobei diese Montage durch Annäherung der beiden Schenkel (7') der Stücke (7) und Umschließen der Achssegmente (5'), die sich zwischen zwei aufeinanderfolgenden Klappen (6) erstrecken, zwischen den Lagerstücken (10) der Schenkel (7') jedes der betreffenden Stücke (7) erfolgt;
- die ergänzte Funktionseinheit Achse (5)/Klappen (6)/Lager bildende Stücke (7) in den Endabschnitten (2') und den Ausnehmungen und/oder Aufnahmelagerungen (8, 9, 9') einzubauen, wobei die Lager bildenden Stücke (7) in passende Lagerungen (8) eingeführt werden, die in der Platine (4) ausgebildet oder ausgespart und zwischen den Endabschnitten (2') der Rohrleitungen (2) angeordnet sind, wobei die vorderen Enden (7") der Schenkel (7') der Lager bildenden Stücke (7) am Boden der Lagerungen (8) angeordnet sind;
- ein Formen oder Aufformen im Bereich der Seite der Platine (4) durchzuführen, die dazu bestimmt ist, mit dem Zylinderkopfblock in Kontakt zu kommen und die die Kontaktseite oder -ebene (PC) umfasst, wobei das durch Formen oder Aufformen aufgebrachte Material einerseits die mechanische Blockierung der Komponenten der ergänzten Funktionseinheit (5, 6, 7) in ihren Ausnehmungen und/oder Lagerungen (2', 8, 9, 9'), die sie jeweils aufnehmen, gewährleistet und andererseits Formationen (11, 14, 14') darstellt, die an der Abdichtung gegen Gase zwischen den Endabschnitten (2') der Rohrleitungen (2) und dem Zylinderkopfblock, insbesondere im Bereich der Kontaktseite oder -ebene (PC), sowie eventuell zwischen den Rohrleitungen (2), beteiligt sind oder die Abdichtung herstellen.

2. Verfahren nach Anspruch 1, **dadurch gekennzeichnet, dass** die Einführung der Lager bildenden Stücke (7) in die Lagerungen (8) mit einem im Wesentlichen angepassten Ineinanderstecken und gleichzeitig mit dem Einbau der Klappen (6) in den Enden (2') der Rohrleitungen (2) erfolgt.

3. Verfahren nach einem der Ansprüche 1 oder 2, **dadurch gekennzeichnet, dass** es darin besteht, geformte oder aufgeformte Formationen (11, 14, 14')bereitzustellen, die gemeinsam eine einstückige Struktur darstellen und einerseits ringförmige Formationen (11), die Wände (12') von Nuten (12) zur Aufnahme von Dichtungen (13) bilden oder aufweisen, die sich jeweils um eine Ausgangsöffnung (3) einer Rohrleitung (2) erstrecken, und andererseits Materialbrücken (14, 14') umfassen, die die ringförmigen Formationen (11) miteinander verbinden und die Lager bildenden Stücke (7) überdecken, wobei sie sie in ihren jeweiligen Aufnahmelagerungen (8) blockieren, wobei die Formationen (11, 14, 14') im Wesentlichen bündig im Bereich der Kontaktseite oder -ebene (PC) der Platine (4) angeordnet sind.

4. Verfahren nach einem der Ansprüche 1 oder 2, **dadurch gekennzeichnet, dass** es darin besteht, geformte oder aufgeformte Formationen (11, 14, 14')bereitzustellen, die gemeinsam eine einstückige Struktur bilden und einerseits ringförmige Formationen (11) umfassen, die in Nuten (12) aufgenommen sind, die in der Platine (4) ausgebildet sind und sich jeweils um eine Ausgangsöffnung (3) einer der Rohrleitungen (2) erstrecken und jeweils eine Dichtung (13) für die entsprechende Ausgangsöffnung (3) darstellen, und andererseits Materialbrücken (14, 14') umfassen, die die ringförmigen Formationen (11) miteinander verbinden und die Lager bildenden Stücke (7) überdecken, wobei sie sie in ihren jeweiligen Aufnahmelagerungen (8) blockieren, wobei die Formationen (11, 14, 14') im Wesentlichen bündig im Bereich der Kontaktseite oder -ebene (PC) der Platine (4) angeordnet sind.

5. Verfahren nach den Ansprüchen 2 und 3 oder 2 und 4, **dadurch gekennzeichnet, dass** es darin besteht, die beiden Schenkel (7') jedes ein Lager bildenden Stücks (7) mit abgeschrägten hinteren Enden (7"') zu versehen, um eine Nut (15) in Form einer Ecke zwischen diesen beiden Schenkeln (7') zu begrenzen, wenn diese letztgenannten einander angenähert werden, um ein Drehführungslager zu bilden, wobei das Aufformungsmaterial (14, 14') die Ecknuten (15) der verschiedenen Lager bildenden Stücke (7) füllt, die im Bereich der Kontaktseite oder -ebene (PC) der Platine (4) sichtbar sind, wenn die Stücke (7) in ihren entsprechenden Aufnahmelagerungen (8) angeordnet sind.

6. Verfahren nach einem der Ansprüche 2 bis 5, **dadurch gekennzeichnet, dass** es darin besteht, eine mechanische Befestigung und/oder ein Anschlagen der Lager bildenden Stücke (7) in ihrer endgültigen Montage- oder Eingriffsposition in ihren jeweiligen Lagerungen (8) beispielsweise durch Kontaktierung von komplementären Absätzen (16 und 16') zu gewährleisten, und zumindest einen Abschnitt der hinteren Enden (7"') der Schenkel (7') der Lager bildenden Stücke (7), der in Bezug zur Kontaktseite oder -ebene (PC) der Platine (4) zurückgesetzt ist, mit dem Aufformungsmaterial zu überdecken.

7. Verfahren nach einem der Ansprüche 3, 5 oder 6, **dadurch gekennzeichnet, dass** die Endabschnitte (2') der Rohrleitungen (2), um die Ausgangsöffnungen (3), Roh-Nuten (12) umfassen, in die das Formungs- oder Aufformungsmaterial der ringförmigen Formationen (11) eingespritzt wird, um mindestens eine der Innenwände (12') der Nuten (12), insbesondere die Bodenwand und/oder die Außenwand, zu bilden, wobei die Wände (12") dieser Roh-Nuten (12), die dazu bestimmt sind, aufgeformt zu werden, vorspringende Formationen (17), wie beispielsweise Rippen mit dreieckigem Querschnitt, umfassen, die dazu bestimmt sind, die Befestigung des Formungs- oder Aufformungsmaterials und die Abdichtung zwischen diesem letztgenannten und der oder den mit ihm in Kontakt befindlichen Innenwand(-wänden) (12') zu begünstigen.

8. Verfahren nach einem der Ansprüche 4 oder 5, **dadurch gekennzeichnet, dass** das Formungs- oder Aufformungsmaterial der ringförmigen Formationen (11) mit mindestens einer der Innenwände (12') der jeweils betroffenen Nuten (12) in engen Kontakt gebracht wird, insbesondere zumindest mit der Bodenwand, wobei die Wand (Wände) (12') vorspringende Formationen (17), wie beispielsweise Rippen mit dreieckigem Querschnitt, umfassen, die dazu bestimmt sind, die Befestigung des Formungs- oder Aufformungsmaterials und die Abdichtung zwischen diesem letztgenannten und der oder den mit ihm in Kontakt befindlichen Innenwand (-wänden) (12') zu begünstigen.

9. Verfahren nach einem der Ansprüche 7 oder 8, **dadurch gekennzeichnet, dass** das thermoplastische Formungs- oder Aufformungsmaterial, das die Formationen (11, 14, 14') darstellt, derart gewählt ist, dass es mit dem thermoplastischen Material, das den Körper (1') des Ansaugkrümmers oder -verteilers bildet, kompatibel ist, und dass es eine Erweichungstemperatur im Wesentlichen gleich jener dieses letztgenannten Materials aufweist, um zumindest zu einer oberflächlichen Erweichung, vorteilhafterweise einem oberflächlichen Aufschmelzen mit Mischung der Phasen, des Materials des Körpers (1') des Ansaugkrümmers oder -verteilers, insbesondere einem teilweisen Aufschmelzen der vorspringenden Formationen (17), zu führen, wobei die Materialien der Formationen (11, 14, 14') und des Körpers (1') vorzugsweise identisch sind.

10. Verfahren nach einem der Ansprüche 1 oder 2, **dadurch gekennzeichnet, dass** es darin besteht, geformte oder aufgeformte Formationenbereitzustellen, die gemeinsam eine einstückige Struktur darstellen, umfassend Teile zumindest der Platine (4) und eventuell Teile der Rohrleitungen (2), vorteilhafterweise im Bereich ihrer Endabschnitte (2') und/oder ihrer jeweiligen Ausgangsöffnungen (3), die zum Körper (1') des Ansaugkrümmers oder -verteilers komplementär sind, und die zumindest teilweise die Kontaktseite der Platine (4) sowie die Mittel zur Abdichtung (13) des Zusammenbaus der Platine (4) mit dem Zylinderkopfblock oder die Aufnahmebereiche solcher Abdichtungsmittel (13) definieren, wobei das Formungs- oder Aufformungsmaterial mit dem Material, das den Körper (1') des Ansaugkrümmers oder -verteilers bildet, kompatibel, vorzugsweise identisch, ist.

11. Verfahren nach einem der Ansprüche 1 bis 10, **dadurch gekennzeichnet, dass** es darin besteht, die Einheit Achse (5)/Klappen (6) durch teilweises oder vollständiges Aufformen der Klappen (6) auf die Achse (5) herzustellen, wobei diese letztgenannte eventuell vormontierte Klappenbeschläge umfasst.

12. Verfahren nach einem der Ansprüche 1 bis 10, **dadurch gekennzeichnet, dass** es darin besteht, die Einheit Achse (5)/Klappe (6) in einem Stück durch Formen herzustellen, wobei die einstückige Einheit (5, 6) eine Wechselfolge von Klappen (6) und Achssegmenten (5') aus einem Stück umfasst.

13. Verfahren nach einem der Ansprüche 11 oder 12, **dadurch gekennzeichnet, dass** die Klappen (6) in Bezug zu der Achse oder zu den Achssegmenten (5) achsversetzt angeordnet sind, und dass jeder der Endabschnitte (2') der Rohrleitungen (2) eine innere Verstärkung (9) umfasst, deren Abdruck eine Form entsprechend jener der Klappe (6) aufweist, die in dem Endabschnitt (2') montiert ist.

14. Verfahren nach einem der Ansprüche 11 bis 13, **dadurch gekennzeichnet, dass** es darin besteht, beim Aufformen oder Formen scheibenförmige Formationen (18) beiderseits jeder Klappe (6) herzustellen, wobei diese Formationen (18) in Bezug zu der Achse (5), die die Klappen (6) trägt, oder in Bezug zu dem Achssegment (5'), das an die betreffende Klappe (6) angrenzt, zentriert sind, wobei sie einen größeren Durchmesser als die Achse (5) oder das Achssegment (5') aufweisen.

15. Verfahren nach Anspruch 14, **dadurch gekennzeichnet, dass** die Endabschnitte (2') der Rohrleitungen (2) und die Lager bildenden Stücke (7) jeweils seitliche Ausnehmungen (9') umfassen, die durch wechselseitiges Zusammenwirken nach dem Einbau der Stücke (7) in ihren jeweiligen Lagerungen (8) freigelegte Stellen oder Ausnehmungen für die eingepasste Aufnahme mit Drehmöglichkeit der scheibenförmigen Formationen (18) definieren, wobei diese letztgenannten die Kontinuität der Innenseite der Endabschnitte (2') der betreffenden Rohrleitungen (2) gewährleisten.

16. Verfahren nach einem der Ansprüche 1 bis 15, **dadurch gekennzeichnet, dass** der Körper (1') des Ansaugkrümmers, die Einheit Achse (5)/Klappen (6) und die Lager bildenden Stücke (7) aus einem thermoplastischen Material, das eventuell gefüllt ist, derart hergestellt werden, dass der Körper (1') des Ansaugkrümmers durch den Zusammenbau von mindestens zwei Einzelbauteilen durch Vibrationsschweißen, Kleben oder dergleichen erhalten wird, dass die beiden Schenkel (7') der Lager bildenden Stücke (7) im Bereich ihrer vorderen Enden (7") durch einen ein Scharnier bildenden Materialschleier verbunden sind, und dass nach dem Aufformungsvorgang eventuell der Einbau der Dichtungen (13) im Bereich der Nuten (12), die sich um die Ausgangsöffnungen (3) der Rohrleitungen (2) befinden, und der Einbau der Funktionszubehörteile und Befestigungsteile des Ansaugkrümmers (1) erfolgen.

17. Ansaugkrümmer oder -verteiler, umfassend mehrere Rohrleitungen, deren Endabschnitte, die die Ausgangsöffnungen definieren, vorzugsweise wechselseitig ausgerichtet und zu mindestens einer Einheitsstruktur im Bereich mindestens einer Befestigungs- und Anschlussplatine für die dichte Montage des Ansaugkrümmers oder -verteilers auf dem Zylinderkopfblock eines Verbrennungsmotors zusammengefasst sind, wobei die oder jede Platine eine Kontaktseite, vorzugsweise eine Kontaktebene mit dem Zylinderkopfblock definiert, wobei der Ansaugkrümmer oder -verteiler eine Einheit [Achse/Klappen] umfasst, die in den Endabschnitten der Rohrleitungen und in der Platine in entsprechenden Ausnehmungen und/oder Lagerungen montiert ist,
wobei der Ansaugkrümmer oder -verteiler (1) **dadurch gekennzeichnet ist, dass** er einerseits Drehführungslager bildende Stücke (7) für die Einheit Achse (5)/Klappen (6) in Form von Einsätzen umfasst, die in entsprechenden Aufnahmelagerungen (8) montiert sind, und andererseits Formationen (11, 14, 14') aus einem aufgeformten Material im Bereich der Seite der Platine (4) umfasst, die dazu bestimmt ist, mit dem Motorblock in Kontakt zu kommen, und vorteilhafterweise eine Kontaktebene (PC) definiert, wobei die durch Formen oder Aufformen aufgebrachten Formationen (11, 14, 14') die mechanische Blockierung der Funktionseinheit (5, 6) und der Einsatzstücke (7) in ihren jeweiligen Ausnehmungen und/oder Lagerungen (2', 8, 9, 9') gewährleisten und Formationen (11, 14, 14') darstellen, die an der Abdichtung gegen Gase zwischen den Endabschnitten (2') der Rohrleitungen (2) und dem Zylinderkopfblock, insbesondere im Bereich der Kontaktseite oder -ebene (PC), sowie eventuell zwischen den Rohrleitungen (2), beteiligt sind oder die Abdichtung herstellen, und dass die Lager bildenden Stücke (7) jeweils aus zwei wechselseitig komplementären Schenkeln (7') mit vorderen Enden (7") und hinteren Enden (7"') bestehen, wobei jeder Schenkel (7') eine Verstärkung (10) aufweist, die einen Drehlagerabschnitt definiert, wobei die Lagerabschnitte (10) die Achssegmente (5') umschließen, die sich zwischen zwei aufeinanderfolgenden Klappen (6) erstrecken, und wobei die Lager bildenden Stücke (7) in passende Lagerungen (8) eingesetzt sind, die in der Platine (4) ausgebildet oder ausgespart sind und zwischen den Endabschnitten (2') der Rohrleitungen (2) angeordnet sind, wobei die vorderen Enden (7") der Schenkel (7') der Lager bildenden Stücke (7) am Boden der Lagerungen (8) angeordnet sind.

18. Ansaugkrümmer oder -verteiler nach Anspruch 17, **dadurch gekennzeichnet, dass** jedes ein Lager bildende Stück (7) von zwei Schenkeln (7') gebildet ist, die jeweils eine halbzylindrische Verstärkung (10) aufweisen, die komplementäre zylindrische Drehlagerabschnitte definieren, wobei die Lager bildenden Stücke (7) in ihren jeweiligen Lagerungen (8) durch Einstecken eingepasst montiert sind, wobei die Achssegmente (5) im Bereich der Verstärkungen (10) von ihren in Kontakt befindlichen Schenkelpaaren (7') umschlossen sind und in ihren Lagerungen (8) durch das geformte oder aufgeformte Material in ihrer Position blockiert sind.

19. Ansaugkrümmer oder -verteiler nach einem der Ansprüche 17 oder 18, **dadurch gekennzeichnet, dass** die Formationen (11, 14, 14') aus geformtem oder aufgeformtem Material gemeinsam eine einstückige Struktur darstellen, die einerseits ringförmige Formationen (11) integriert, die Wände (12') von Nuten (12) zur Aufnahme von Dichtungen (13), die sich jeweils um eine Öffnung (3) einer Rohrleitung (2) erstrecken, bilden oder aufweisen, und die andererseits Materialbrücken (14, 14') integriert, die die ringförmigen Formationen (11) miteinander verbinden und die Lager bildenden Stücke (7) überdecken, wobei sie sie in ihren jeweiligen Aufnahmelagern (8) blockieren, wobei die Formationen (11, 14, 14') im Wesentlichen bündig im Bereich der Kontaktseite oder -ebene (PC) der Platine (4) angeordnet sind.

20. Ansaugkrümmer oder -verteiler nach einem der Ansprüche 17 oder 18, **dadurch gekennzeichnet, dass** die Formationen (11, 14, 14') aus geformtem oder aufgeformtem Material gemeinsam eine einstückige Struktur darstellen, die einerseits ringförmige Formationen (11) umfassen, die in Nuten (12) aufgenommen sind, die in der Platine (4) ausgebildet sind und sich jeweils um eine Ausgangsöffnung (3) einer der Rohrleitungen (2) erstrecken und jeweils eine Dichtung (13) für die entsprechende Ausgangsöffnung (3) darstellen, und die andererseits Materialbrücken (14, 14') umfassen, die die ringförmigen Formationen (11) miteinander verbinden und die Lager bildenden Stücke (7) überdecken, wobei sie sie in ihren jeweiligen Aufnahmelagerungen (8)blockieren, wobei die Formationen (11, 14, 14') im Wesentlichen bündig im Bereich der Kontaktseite oder -ebene (PC) der Platine (4) angeordnet sind.

21. Ansaugkrümmer oder -verteiler nach den Ansprüchen 18 bis 20, **dadurch gekennzeichnet, dass** die Lager bildenden Stücke (7) im Bereich der hinteren Enden (7"') ihrer Schenkel (7') nahe der Kontaktseite oder -ebene (PC) eine Nut (15) mit dreieckigem Querschnitt oder mit Eckquerschnitt aufweisen, die durch Abschrägungen gegenüber den Schenkeln (7') begrenzt ist, wobei die Materialbrücken (14, 14'), die von dem geformten oder aufgeformten Material gebildet sind, Eckformationen (14) umfassen, die sich in diesen Nuten (15) eingepasst erstrecken.

22. Ansaugkrümmer oder -verteiler nach einem der Ansprüche 18 bis 21, **dadurch gekennzeichnet, dass** jedes ein Lager bildende Stück (7) mit mindestens einem Absatz (16') oder dergleichen, beispielsweise in Form von Seitenflügeln, in Kontakt mit mindestens einem konjugierten Absatz (16) der entsprechenden Aufnahmelagerung (8) versehen ist, und dass mindestens ein Abschnitt der hinteren Enden (7"') der Schenkel (7') jedes Stücks (7) in Bezug zu der Kontaktseite oder -ebene (PC) der Platine (4) zurückgesetzt angeordnet und mit einem aufgeformten Materialabschnitt (14') im Wesentlichen in Plattenform überdeckt ist, der Teil einer Materialbrücke ist und im Wesentlichen bündig mit der Kontaktseite oder -ebene (PC) angeordnet ist.

23. Ansaugkrümmer oder -verteiler nach einem der Ansprüche 17 bis 22, **dadurch gekennzeichnet, dass** die Einheit Achse (5)/Klappen (6) ein durch Formen hergestelltes einstückiges Teil ist, umfassend eine Wechselfolge von Klappen (6) und Achssegmenten (5) aus einem Stück, und dass sie scheibenförmige Formationen (18) beiderseits jeder Klappe (6) umfasst, wobei diese Formationen (18) in Bezug zu der Achse (5), die die Klappen (6) trägt, oder in Bezug zu dem Achssegment (5'), das an die betreffende Klappe (6) angrenzt, zentriert sind, wobei sie einen größeren Durchmesser als die Achse oder das Achssegment (5) aufweisen, und dass die Endabschnitte (2') der Rohrleitungen (2) und die Lager bildenden Stücke (7) jeweils seitliche Ausnehmungen (9') umfassen, die durch wechselseitiges Zusammenwirken freigelegte Stellen oder Ausnehmungen für die eingepasste Aufnahme mit Drehmöglichkeit der scheibenförmigen Formationen (18) definieren, wobei diese letztgenannten die Kontinuität der Innenseite der Endabschnitte (2') der betreffenden Rohrleitungen (2) gewährleisten.

24. Ansaugkrümmer oder -verteiler nach einem der Ansprüche 17 bis 23, **dadurch gekennzeichnet, dass** die Klappen (6) achsversetzt in Bezug zu der Achse oder den Achssegmenten (5) angeordnet sind, und dass jeder der Endabschnitte (2') der Rohrleitungen (2) eine innere Verstärkung (9) umfasst, deren Abdruck eine Form aufweist, die an jene der Klappe (6), die in dem Endabschnitt (2') montiert ist, angepasst ist.

25. Ansaugkrümmer oder -verteiler nach einem der Ansprüche 17 bis 24, **dadurch gekennzeichnet, dass** der Körper (1') des Ansaugkrümmers, die Einheit Achse (5)/Klappen (6) und die Lager bildenden Stücke (7) aus einem, eventuell gefüllten, thermoplastischen Material hergestellt sind, wobei das geformte oder aufgeformte Material mit dem vorgenannten thermoplastischen Material kompatibel und vorzugsweise identisch ist, dass der Körper (1') des Ansaugkrümmers durch Zusammenbau von mindestens zwei Einzelbauteilen durch Vibrationsschweißen, Kleben oder dergleichen erhalten wird, und dass die beiden Schenkel (7') der Lager bildenden Stücke (7) im Bereich ihrer vorderen Enden (7") durch einen ein Scharnier bildenden Materialschleier verbunden sind.

26. Ansaugkrümmer oder -verteiler nach einem der Ansprüche 17 bis 25, **dadurch gekennzeichnet, dass** er mit Hilfe des Herstellungsverfahrens nach einem der Ansprüche 1 bis 16 erhalten wird.

27. Kraftfahrzeug mit Verbrennungsmotor, **dadurch gekennzeichnet, dass** sein Einlasssystem einen Ansaugkrümmer oder -verteiler nach einem der Ansprüche 17 bis 26 umfasst.

## Claims

1. Process for the production of an intake manifold or an intake splitter comprising several pipes that are provided with regulating valves and whose end parts defining the outlet openings are preferably mutually aligned and grouped into at least one unit structure at the level of at least one attachment and connection plate, suitable for the mounting of said manifold or splitter on the cylinder head block of an internal combustion engine, whereby said or each plate defines a contact surface, preferably a contact plane, for a sealed assembly with said cylinder head block or a portion of the latter, this process consisting primarily in:
- providing, on the one hand, a functional unit shaft (5)/valves (6), and, on the other hand, parts (7) to be inserted that form bearings, and, finally, a manifold body (1') or splitter body (1) having, at the level of the attachment and connection plate (4) and end portions (2') of the pipes (2), recesses and/or housings (8, 9, 9') for receiving the functional unit (5, 6) and above-mentioned parts (7) to be inserted, the parts that form bearings (7) being each composed of two mutually complementary branches (7'), with front ends (7") and rear ends (7"'), whereby each branch (7') has a recess (10) that defines a portion of the rotational bearing;
- mounting the parts (7) that form bearings on the unit shaft (5)/valves (6), more particularly on the shaft segments (5') that extend between the valves (6), this mounting being performed by drawing together the two branches (7') of said parts (7) and by clamping the shaft segments (5') that extend between two consecutive valves (6) between the parts of bearings (10) of the branches (7') of each of said parts (7) that are concerned;
- installing the completed functional unit shaft (5)/valves (6)/parts that form bearings (7) in the end portions (2') and the recesses and/or housings for receiving (8, 9, 9'), by introducing said parts that form bearings (7) in suitable housings (8) that are formed or provided in the plate (4) and located between the end portions (2') of the pipes (2), whereby the front ends (7") of the branches (7') of the parts that form bearings (7) are located at the bottom of said housings (8);
- implementing a molding or over-molding at the level of the surface of the plate (4) that is intended to come into contact with the cylinder head block and that comprises the contact surface or contact plane (PC), the material connected by molding or over-molding ensuring, on the one hand, the mechanical locking of the components of the completed functional unit (5, 6, 7) in their recesses and/or housings (2', 8, 9, 9') that respectively receive them and that constitute, on the other hand, formations (11, 14, 14') that work with or produce the sealing against gases between the end portions (2') of the pipes (2) and the cylinder head block, more particularly at the level of the contact surface or contact plane (PC), as well as optionally between the pipes (2).

2. Process according to Claim 1, **characterised in that** the introduction of the parts that form bearings (7) in the housings (8) is performed with an essentially adjusted interlocking and simultaneously with the installation of the valves (6) in the end portions (2') of the pipes (2).

3. Process according to any of Claims 1 and 2, **characterised in that** it consists in providing molded or over-molded formations (11, 14, 14') that together constitute an integral structure and that comprise, on the one hand, annular formations (11) that form or cover the walls (12') with grooves (12) for receiving sealing joints (13), each extending around an outlet opening (3) of the pipe (2), and, on the other hand, material bridges (14, 14') that connect said annular formations (11) to one another and cover the parts that form bearings (7) by locking them in their respective receiving housings (8), whereby said formations (11, 14, 14') are essentially flush at the level of the contact surface or the contact plane (PC) of the plate (4).

4. Process according to any of Claims 1 and 2, **characterised in that** it consists in providing molded or over-molded formations (11, 14, 14') that together constitute an integral structure and that comprise, on the one hand, annular formations (11) that are accommodated in grooves (12) that are formed in the plate (4) and that each extend around an outlet opening (3) of one of the pipes (2) and that each constitute a sealing joint (13) for the corresponding outlet opening (3), and, on the other hand, material bridges (14, 14') that connect said annular formations (11) to one another and cover the parts that form bearings (7) by locking them in their respective receiving housings (8), whereby said formations (11, 14, 14') are essentially flush at the level of the contact surface or the contact plane (PC) of the plate (4).

5. Process according to Claims 2 and 3 or 2 and 4, **characterised in that** it consists in providing the two branches (7') of each part that forms a bearing (7) with rear ends (7"') that are beveled so as to delimit a wedge-shaped groove (15) between these two branches (7'), when the latter are drawn closer so as to constitute a guide bearing in rotation, with the over-molded material (14, 14') filling the grooves at the corners (15) of different parts that form bearings (7), which are apparent at the level of the contact surface or the contact plane (PC) of the plate (4) when said parts (7) are arranged in their corresponding receiving housings (8).

6. Process according to any of Claims 2 to 5, **characterised in that** it consists in ensuring a mechanical wedging and/or a stop of the parts that form bearings (7) in their mounting position or final engagement position in their respective housings (8), for example by coming into contact with complementary shoulders (16 and 16'), and in covering at least a portion of the rear ends (7"') of the branches (7') of said parts that form bearings (7), located set back relative to the contact surface or the contact plane (PC) of the plate (4), with the over-molding material.

7. Process according to any of Claims 3, 5 and 6, **characterised in that** the end portions (2') of the pipes (2) comprise, around outlet openings (3), outlines of grooves (12) into which the molding or over-molding material of the annular formations (11) is injected to constitute at least one of the inside walls (12') of said grooves (12), in particular the bottom wall and/or the outside wall, whereby the walls (12") of these outlines of grooves (12) intended to be over-molded comprise projecting formations (17), such as, for example, ribs with a triangular cross-section, designed to promote the hooking of the molding or over-molding material and the seal between the latter and the inside wall(s) (12') in contact therewith.

8. Process according to any of Claims 4 and 5, **characterised in that** the material for molding or over-molding the annular formations (11) is brought into close contact with at least one of the inside walls (12') of the grooves (12) that are respectively concerned, in particular at least with the bottom wall, whereby said wall(s) (12') comprise projecting formations (17), such as, for example, ribs with a triangular cross-section, intended to promote the hooking of the molding or over-molding material and the seal between the latter and the inside wall(s) (12') in contact therewith.

9. Process according to any of Claims 7 and 8, **characterised in that** the thermoplastic material for molding or over-molding that constitutes the formations (11, 14, 14') is selected for being compatible with the thermoplastic material that forms the manifold or splitter body (1') and for having a softening temperature that is essentially equivalent to that of this latter material, so as to bring about an at least superficial softening, advantageously a superficial refusion with mixing of the phases, said material of the manifold or splitter body (1'), in particular a partial refusion of projecting formations (17), whereby the materials of the formations (11, 14, 14') and the body (1') are preferably identical.

10. Process according to any of Claims 1 and 2, **characterised in that** it consists in providing molded or over-molded formations that together constitute an integral structure, comprising at least parts of the plate (4) and optionally parts of pipes (2), advantageously at the level of their end portions (2') and/or their respective, complementary outlet openings (3) of the manifold or splitter body (1'), and defining at least partially the contact surface of the plate (4), as well as the sealing means (13) of the assembly of said plate (4) with the cylinder head block or the sites for receiving such sealing means (13), the molding or over-molding material being compatible with the material that constitutes the manifold or splitter body (1'), preferably identical to the latter.

11. Process according to any of Claims 1 to 10, **characterised in that** it consists in producing the unit shaft (5)/valves (6) by over-molding of the valves (6), partially or completely, on the shaft (5), whereby the latter optionally comprises premounted valve reinforcing structures.

12. Process according to any of Claims 1 to 10, **characterised in that** it consists in producing the unit shaft (5)/valves (6) in a single piece by molding, whereby said individual unit (5, 6) comprises an alternating series of valves (6) and segments of shaft (5') in a single piece.

13. Process according to any of Claims 11 and 12, **characterised in that** the valves (6) are positioned in an offset manner relative to the shaft or the shaft segments (5) and **in that** each of the end portions (2') of the pipes (2) comprises an inside recess (9) whose imprint has a shape that mates with that of the valve (6) that is mounted in said end portion (2').

14. Process according to any of Claims 11 to 13, **characterised in that** it consists in producing, during the over-molding or the molding, disk-shaped formations (18) on both sides of each valve (6), whereby these formations (18) are centered relative to the shaft (5) that bears the valves (6) or relative to the shaft segment (5') that is adjacent to the valve (6) under consideration, in exhibiting a diameter that is greater than said shaft (5) or segment (5').

15. Process according to Claim 14, **characterised in that** the end portions (2') of the pipes (2) and the parts that form bearings (7) comprise respective lateral recesses (9') that define, by mutual cooperation after installation of said parts (7) in their respective housings (8), cleared sites or recesses for the adjusted reception with the ability of said disk-shaped formations (18) to rotate, whereby the latter ensure the continuity of the inside surface of the end portions (2') of the pipes (2) in question.

16. Process according to any of Claims 1 to 15, **characterised in that** the manifold body (1'), the unit shaft (5)/valves (6), and the parts that form bearings (7) are made of a thermoplastic material, optionally loaded, **in that** the manifold body (1') is produced by assembling at least two elementary constituent parts, by vibration welding, bonding, etc., **in that** the two branches (7') of the parts (7) that form bearings are connected, at the level of their front ends (7"), by a fabric of material forming a hinge, and **in that** after the over-molding operation, optionally the installation of the sealing joints (13) is initiated at the level of the grooves (12) that extend around the outlet openings (3) of the pipes (2), and the installation of the functional attachment accessories of the manifold (1) is initiated.

17. Intake manifold or intake splitter comprising several pipes whose end portions that define the outlet openings are preferably mutually aligned and grouped in at least one unit structure at the level of at least one attachment and connection plate for the sealed mounting of said manifold or splitter on the cylinder head block of an internal combustion engine, whereby said or each plate defines a contact surface, preferably a contact plane with said cylinder head block, whereby said manifold or splitter comprises a unit [shaft/valves] that is mounted in said end portions of the pipes and in said plate, in corresponding recesses and/or housings,
manifold or splitter (1) **characterised in that** it comprises, on the one hand, parts (7) that form guide bearings in rotation of the unit shaft (5)/valves (6) in the form of inserts mounted in the corresponding receiving housings (8), and, on the other hand, formations (11, 14, 14') of over-molded material at the level of said surface of the plate (4) that is intended to come into contact with the engine block and that advantageously defines a contact plane (PC), whereby said formations (11, 14, 14') that are connected by molding or over-molding ensure the mechanical lock of the functional unit (5, 6) and parts (7) to be inserted in their respective recesses or housings (2', 8, 9, 9') and constitute formations (11, 14, 14') that work with or produce the sealing against gases between the end portions (2') of the pipes (2) and the cylinder head block, more particularly at the level of the surface of the contact plane, as well as optionally between the pipes (2), and **in that** the parts that form bearings (7) are each composed of two mutually complementary branches (7'), with front ends (7") and rear ends (7"'), whereby each branch (7') has a recess (10) that defines a portion of the rotational bearing, whereby the bearing portions (10) clamp the shaft segments (5') extending between two consecutive valves (6) and the parts that form bearings (7') are introduced in suitable housings (8) that are formed or provided in the plate (4) and located between the end portions (2') of the pipes, whereby the front ends (7') of the branches (7') of the parts that form bearings (7) are located in the bottom of said housings (8).

18. Manifold or splitter according to Claim 17, **characterised in that** each part that forms a bearing (7) consists of two branches (7'), each having a semi-cylindrical recess (10), defining the complementary cylindrical rotational bearing parts, whereby said parts that form bearings (7) are mounted with adjusted interlocking in their respective housings (8), by clamping the shaft segments (5) at the level of the recesses (10) opposite their pairs of branches (7') that are in contact and by being locked in position in their housings (8) by the molded or over-molded material.

19. Manifold or splitter according to any of Claims 17 and 18, **characterised in that** the formations (11, 14, 14') of molded or over-molded material together constitute an integral structure that integrates, on the one hand, annular formations (11) that form or cover the walls (12') with grooves (12) for receiving sealing joints (13), each extending around an opening (3) of the pipe (2), and, on the other hand, material bridges (14, 14') that connect said annular formations (11) to one another and cover the parts that form bearings (7) by locking them in their respective receiving housings, whereby said formations (11, 14, 14') are essentially flush at the level of the surface of the contact plane (PC) of the plate (4).

20. Manifold or splitter according to any of Claims 17 and 18, **characterised in that** the formations (11, 14, 14') of the molded or over-molded material together constitute an integral structure that integrates, on the one hand, annular formations (11) that are accommodated in grooves (12) that are formed in the plate (4) and that each extend around an outlet opening (3) of one of the pipes (2) and that each constitute a sealing joint (13) for the corresponding outlet opening (3), and, on the other hand, material bridges (14, 14') that connect said annular formations (11) to one another and cover the parts that form bearings (7) by locking them in their respective receiving housings (8), whereby said formations (11, 14, 14') are essentially flush at the level of the contact surface or the contact plane (PC) of the plate (4).

21. Manifold or splitter according to Claims 18 to 20, **characterised in that** the parts that form bearings (7) have, at the rear ends (7"') of their branches (7') that are close to the contact surface or contact plane (PC), a groove (15) with a triangular cross-section or a wedge shape, delimited by bevels opposite said branches (7'), the material bridges (14, 14') formed by the molded or over-molded material integrating formations at the corners (14) extending in an adjusted manner into these grooves (15).

22. Manifold or splitter according to any of Claims 18 to 21, **characterised in that** each part that forms a bearing (7) is provided with at least one shoulder (16') or the like, for example in the form of lateral wings, in contact with at least one shoulder (16) that mates with the corresponding receiving housing (8) and **in that** at least one portion of the rear ends (7"') of the branches (7') of each part (7) is set back relative to the contact surface or the contact plane (PC) of the plate (4) and is covered by a portion (14') of over-molding material that is essentially in plate form, being part of a material bridge and essentially flush with the contact surface or the contact plane (PC).

23. Manifold or splitter according to any of Claims 17 to 22, **characterised in that** the unit shaft (5)/valves (6) is an integral part that comes from molding, comprising an alternating series of valves (6) and segments of shaft (5) in a single piece, **in that** it comprises disk-shaped formations (18) on both sides of each valve (6), whereby these formations (18) are centered relative to the shaft (5) that bears the valves (6) or relative to the shaft segment (5) that is adjacent to the valve (6) in question, in having a diameter that is greater than said shaft or segment (5), and **in that** the end portions (2') of the pipes (2) and the parts that form bearings (7) comprise respective lateral recesses (9') that define, by mutual cooperation, offset sites or recesses for the adjusted reception with the ability of said disk-shaped formations (18) to rotate, whereby the latter ensure the continuity of the inside surface of the end portions (2') of the pipes (2) in question.

24. Manifold or splitter according to any of Claims 17 to 23, **characterised in that** the valves (6) are positioned in an offset manner relative to the shaft or the shaft segments (5) and **in that** each of the end portions (2') of the pipes (2) comprises an inside recess (9) whose imprint has a shape that mates with that of the valve (6) that is mounted in said end portion (2').

25. Manifold or splitter according to any of Claims 17 to 24, **characterised in that** the manifold body (1'), the unit shaft (5)/valves (6), and the parts that form bearings (7) are made of a thermoplastic material, optionally loaded, whereby the molded or over-molded material is compatible with said above-mentioned thermoplastic material and preferably identical to the latter, **in that** the manifold body (1') is produced by assembling at least two elementary constituent parts, by vibration welding, bonding, etc., and **in that** the two branches (7') of the parts (7) that form bearings are connected, at their front ends (7"), by a fabric of material forming a hinge.

26. Intake manifold or intake splitter according to any of Claims 17 to 25, **characterised in that** it is obtained by means of the production process according to any of Claims 1 to 16.

27. Motor vehicle with an internal combustion engine, **characterised in that** its intake system comprises a manifold or splitter according to any of Claims 17 to 26.
